(19) Europäisches Patentamt
European Patent Office
Office européen des brevets

(11) EP 3 237 656 B1

(12) **EUROPEAN PATENT SPECIFICATION**

(45) Date of publication and mention of the grant of the patent:
**13.05.2020 Bulletin 2020/20**

(21) Application number: **15791637.0**

(22) Date of filing: **10.11.2015**

(51) Int Cl.:
***D01D 5/18*** *(2006.01)* ***D01F 6/74*** *(2006.01)*
***D01F 6/78*** *(2006.01)* ***D01F 6/94*** *(2006.01)*
***C08G 61/10*** *(2006.01)*

(86) International application number:
**PCT/EP2015/076191**

(87) International publication number:
**WO 2016/102113 (30.06.2016 Gazette 2016/26)**

(54) **POLYPHENYLENE FIBERS AND CORRESPONDING FABRICATION METHODS**

POLYPHENYLENFASERN UND ZUGEHÖRIGE HERSTELLUNGSVERFAHREN

FIBRES DE POLYPHÉNYLÈNE ET PROCÉDÉS DE FABRICATION CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2014 US 201462095557 P**

(43) Date of publication of application:
**01.11.2017 Bulletin 2017/44**

(73) Proprietor: **Solvay Specialty Polymers USA, LLC.**
**Alpharetta, GA 30005-3914 (US)**

(72) Inventors:
- **ROLLER, David Blake**
  **Norcross, Georgia 30093 (US)**
- **EL-HIBRI, Mohammad Jamal**
  **Atlanta, Georgia 30350 (US)**
- **KENKARE, Nirupama**
  **Alpharetta, Georgia 30022 (US)**
- **SMITH, DeeDee**
  **Dacula, Georgia 30019 (US)**

(74) Representative: **Benvenuti, Federica**
**Solvay S.A.**
**Département de la Propriété Intellectuelle**
**Rue de Ransbeek, 310**
**1120 Bruxelles (BE)**

(56) References cited:
**EP-B1- 1 858 977**
**WO-A2-2008/116837**
**US-A- 5 646 231**
**US-B2- 8 777 599**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 237 656 B1

## Description

CROSS REFERENCE TO RELATED APPLICATIONS

This application claims priority to U.S. provisional patent application No. 62/095557 filed on December 22, 2014.

FIELD OF THE INVENTION

The invention relates to polyphenylene fibers having desirable mechanical properties. The invention further relates to methods of fabricating polyphenylene fibers.

BACKGROUND OF THE INVENTION

Polymer fibers are desirable in a wide variety of application setting. For example, polymer fibers as mats are widely used separators, substrates, liquid and gas filtration membranes, medical implants, garments (textiles), electrical insulation and personal care products. With respect to liquid and gas filtration membranes, polymer fiber mats are used in application settings including, but not limited to, dialysis filtration, desalination filtration, water filtration, and gas separation. Due to the critical nature of many of the aforementioned application settings, polymer fibers having increased mechanical properties are therefore desirable, thereby reducing the chance of poly fiber failure in the selected application setting Documents EP 1858977 B1, US 5646231, and WO2008116837 A2 present a relevant prior art related to present invention.

SUMMARY OF THE INVENTION

In a first aspect, as defined in the attached claims, the invention relates to a polyphenylene fiber having at least about 5 weight percent of a polyphenylene polymer, wherein the polyphenylene polymer includes at least about 25 mole percent repeat units (Rpm) represented by the following formula :

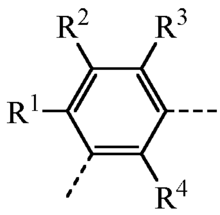

,

and

at least about 10 mol percent repeat units (Rpp) represented by the following formula :

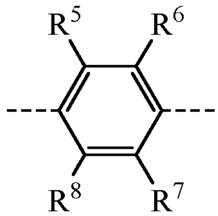

.

$R^1$, $R^2$, $R^3$, $R^4$ $R^5$, $R^6$, $R^7$, and $R^8$ are each independently selected from the group consisting of a hydrogen, an alkyl, an aryl, an alkoxy, an aryloxy, an alkylketone, an arylketone, a fluoroalkyl, a fluoroaryl, a bromoalkyl, a bromoaryl, a chloroalkyl, a chloroaryl, an alkylsulfone, an arylsulfone, an alkylamide, an arylamide, an alkylester, an arylester, a fluorine, a chlorine, and a bromine.

In some embodiments, one or more of $R^1$, $R^2$, $R^3$, and $R^4$ is independently represented by formula Ar-T-, wherein Ar is represented by a formula selected from the following group of formulae :

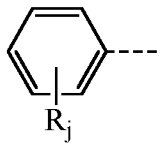, 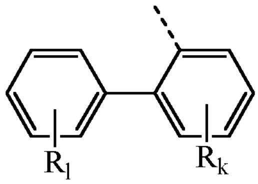, 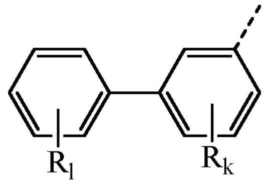

and

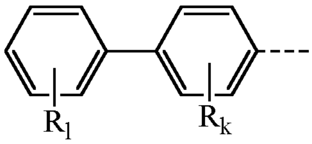.

In such embodiments, each $R_j$, $R_k$ and $R_l$ is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and with j and l, equal or different from each other are independently 0, 1, 2, 3, 4, or 5 and, k, equal or different from j or 1, is independently 0, 1, 2, 3 or 4. Additionally, T is selected from the group consisting of $-CH_2-$; -O-; $-SO_2-$; -S-; -C(O)-; $-C(CH_3)_2-$; $-C(CF_3)_2-$; $-C(=CCl_2)-$; $-C(CH_3)(CH_2CH_2COOH)-$; -N=N-; $-R^aC=CR^b-$, where each $R^a$ and $R^b$, independently of one another, is a hydrogen or a $C_1$-$C_{12}$-alkyl, $C_1$-$C_{12}$-alkoxy, or $C_6$-$C_{18}$-aryl group; $-(CH_2)_n-$ and $-(CF_2)_n-$ with n = integer from 1 to 6; an aliphatic divalent group, linear or branched, of up to 6 carbon atoms; and combinations thereof.

In some embodiments, one or more of $R^1$, $R^2$, $R^3$, and $R^4$ is represented by formula :

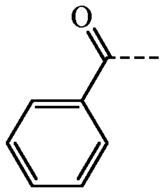.

In some embodiments, the repeat unit Rpm is represented by the formula

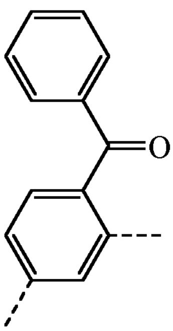.

In some embodiments, the polyphenylene polymer includes at least about 30 mole percent, preferably at least about 40 mole percent mole percent repeat units Rpm. In some embodiments, one or more of $R^5$, $R^6$, $R^7$, and $R^8$ is independently represented by formula Ar"-T"-, wherein Ar" is represented by a formula selected from the following group of formulae

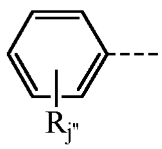,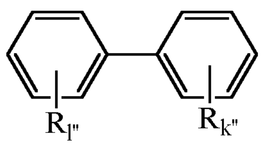,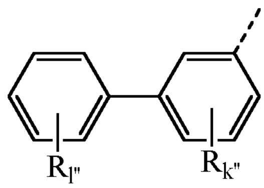

and

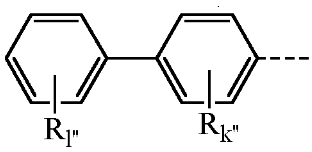,

In such embodiments, each $R_{j''}$, $R_{k''}$ and $R_{l''}$ is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and with j" and 1", equal or different from each other are independently 0, 1, 2, 3, 4, or 5 and, k", equal or different from j or l, is independently 0, 1, 2, 3 or 4. Additionally, T" is selected from the group consisting of $-CH_2-$; -O-; $-SO_2-$; -S-; -C(O)-; $-C(CH_3)_2-$; $-C(CF_3)_2-$; $-C(=CCl_2)-$; $-C(CH_3)(CH_2CH_2COOH)-$; -N=N-; $-R^aC=CR^b-$, where each $R^a$ and $R^b$, independently of one another, is a hydrogen or a $C_1$-$C_{12}$-alkyl, $C_1$-$C_{12}$-alkoxy, or $C_6$-$C_{18}$-aryl group; $-(CH_2)_n-$ and $-(CF_2)_n-$ with n = integer from 1 to 6; an aliphatic divalent group, linear or branched, of up to 6 carbon atoms; and combinations thereof.

In some embodiments, the repeat unit Rpp is represented by the formula :

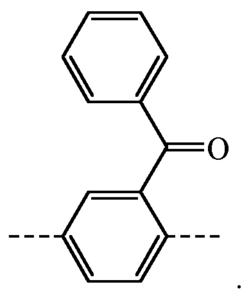.

In some embodiments, the polyphenylene polymer includes at least about 40 mole percent repeat units Rpp.

The polyphenylene fiber can further include a poly(aryl ether sulfone) polymer. In some such embodiments, the poly(aryl ether sulfone) polymer includes repeat units (Rps) represented by a formula selected from the following group of formulae :

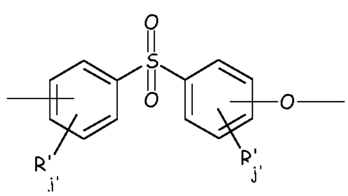 (B)

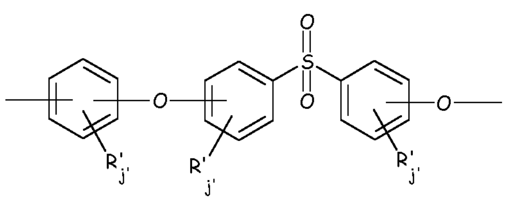 (C)

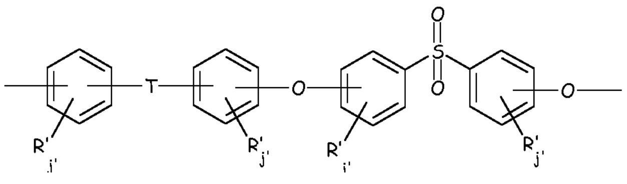 (D)

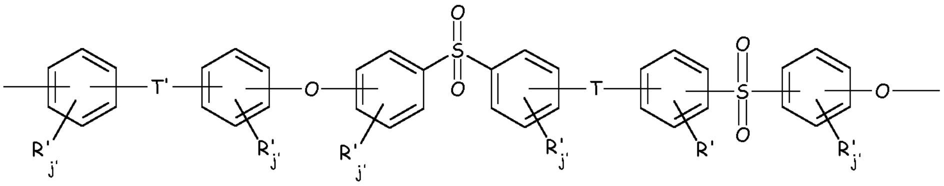 (E)

.

In such embodiments, each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; j' is zero or is an integer from 0 to 4; and T and T', equal to or different from each other, is selected from the group consisting of a bond, $-CH_2-$; -O-; $-SO_2-$; -S-; -C(O)-; $-C(CH_3)_2-$ ;$-C(CF_3)_2-$; $-C(=CCl_2)-$; $-C(CH_3)(CH_2CH_2COOH)-$; -N=N-; $-R^aC=CR^b-$, where each $R^a$ and $R^b$, independently of one another, is a hydrogen or a $C_1$-$C_{12}$-alkyl, $C_1$-$C_{12}$-alkoxy, or $C_6$-$C_{18}$-aryl group; $-(CH_2)_n-$ and $-(CF_2)_n-$ with n being an integer from 1 to 6; an aliphatic divalent group, linear or branched, of up to 6 carbon atoms; and combinations thereof.

The repeat units Rps are represented by a formula selected from the following group of formulae :

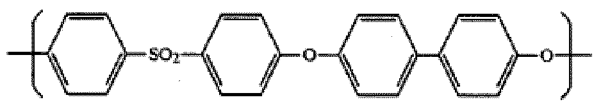,

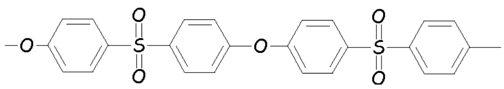

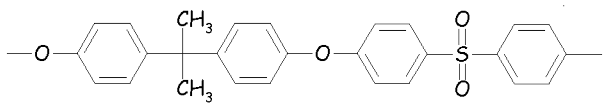

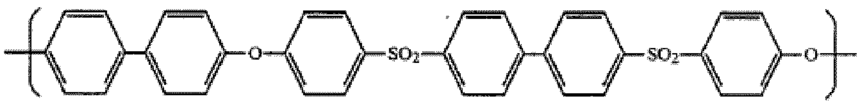

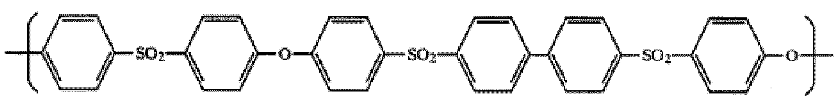

and mixtures thereof. In some embodiments, the poly(aryl ether) sulfone polymer is a polysulfone, poly(ether sulfone) or poly(phenyl sulfone). In some embodiments, the polyphenylene fiber includes no more no more than about 60 wt % of the poly(aryl ether sulfone) polymer.

The method for forming the polyphenylene fiber includes force spinning a polymer solution comprising a polyphenylene polymer and solvent to form the polyphenylene fiber. In such embodiments, the solvent is a first solvent and wherein the polymer solution comprises a solvent blend including the first solvent and an antisolvent. The first solvent is selected from, chloroform, toluene, tetrahydrofuran, dichloromethane, ethyl acetate, benzene, styrene, ethyl benzene, benzyl alcohol, 1,4-dioxane, carbon tetrachloride, tetrachloroethylene, methylene chloride, a phenolic solvent, pyridine, trichloroethane, trichloroethylene, N,N-dimethyl formamide, ethylene dichloride, dimethyl sulfoxide, N,N-dimethylacetamide, a pyrrolidone-based solvent (*e.g.*, N-methylpyrollidone), sulfolane, xylene, chlorobenzene, or any combination

thereof and the antisolvent is selected from the group consisting of acetone methanol, ethanol, isopropanol, propanol, water or any combination thereof.

## BRIEF DESCRIPTION OF THE DRAWINGS

FIG. 1(a) is an SEM image of a collection of polyphenylene fibers.
FIG. 1(b) is an SEM image of the collection of polyphenylene fibers of FIG. 1(a), obtained at lower magnification.
FIG. 2(a) is an SEM image of a collection of polyphenylene fibers having a polyphenylene polymer and a poly(ether sulfone) polymer.
FIG. 2(b) is an SEM image of the collection of polyphenylene fibers of FIG. 2(a), obtained at lower magnification.
FIG. 3(a) is an SEM image of a collection of polyphenylene fibers having a polyphenylene polymer and a polysulfone polymer.
FIG. 3(b) is an SEM image of the collection of polyphenylene fibers of FIG. 3(a), obtained at lower magnification.
FIG. 4(a) is an SEM image of a collection of polyphenylene fibers having a polyphenylene polymer and a poly(phenyl sulfone) polymer.
FIG. 4(b) is an SEM image of the collection of polyphenylene fibers of FIG. 4(a), obtained at lower magnification.

## DETAILED DESCRIPTION OF THE INVENTION

Described herein are fibers including one or more polyphenylene polymers having desirable mechanical properties. In some embodiments, the fiber can further include one or more poly(aryl ether sulfone) polymers. In some embodiments, the polyphenylene fibers can have relatively small average. It has been found that specifically adapted force spinning techniques can be used to fabricate polyphenylene polymers with desirable properties. The fibers can be incorporated into, for example, composites, textiles or filtration devices.
The polyphenylene fibers described herein include one or more polyphenylene polymers. The polyphenylene polymers include at least 25 mole percent repeat units having meta linkages to other repeat units (different or the same as those having the meta linkages), with respect to the total number of repeat units in the polyphenylene polymer. It has been surprisingly found that the aforementioned polyphenylene polymers can be fabricated using specifically adapted force spinning techniques to achieve polyphenylene fibers having desirable mechanical properties including, but not limited to, scaled elastic moduli. Furthermore, in some embodiments, the polyphenylene fibers have one or more polyphenylene polymers and one or more poly(aryl ether sulfone) polymers ("blended polyphenylene fibers"). In additional embodiments, the bulk modulus of the polyphenylene polymers can be larger than that of the poly(aryl ether sulfone) polymers. It has been surprisingly discovered that in such embodiments, the blended polyphenylene fibers can have a scaled modulus that is greater than the scaled modulus of a corresponding fibers free of the poly(aryl ether sulfone) polymers. In further such embodiments, the blended polyphenylene fibers can further have a scaled modulus that is greater than bulk modulus of the polyphenylene polymers.
As used herein, the scaled elastic modulus refers to bulk modulus scaled by the mat porosity. In particular, the scaled elastic modulus can be defined as :

$$E_{fiber} = \frac{E_{mat}}{(1-P)^2},$$

where $E_{fiber}$ is the scaled elastic modulus (average elastic modulus of the fibers in the sample), $E_{mat}$ is the measured elastic modulus of a mat formed from the polyphenylene fibers and P is the porosity of the mat. The elastic modulus of a mat can be measured according the ASTM-D882 standard, using a one inch wide and 4 inch long (direction between the grips) mat sample and using a crosshead speed of 0.5 inches/minute. The elastic modulus can be tested using an Instron® 5569 system with flat rubber pneumatic grips and a 100 Newton ("N") load cell. The gauge area of the Instron® 5569 can be adapted for different sample sizes. To determine the elastic modulus of a mat sample, the fibers of the mat are oriented in the direction of tensile strain applied (*e.g.*, by the Instron® 5569 system). The porosity of a mat sample can be measured using mercury intrusion porosimetry in accordance with the ISO 15901-1 standard. Porosity can be measured using a Micrometrics® Autopore 9600.
In some embodiments, the polyphenylene fibers described herein can have a scaled elastic modulus of from about 0.5 gigaPascals ("GPa") to about 40 GPa, from about 0.5 GPa to about 30 GPa, from about 0.5 GPa to about 35 GPa, from about 0.5 GPa to about 30 GPa, from about 0.5 GPa to about 25 GPa, from about 0.5 GPa to about 25 GPa, from about 1 GPa to about 20 GPa or from about 2 GPa to about 20 GPa. In some embodiments the polyphenylene

fibers can have a scaled elastic modulus of at least 0.5 GPa, at least about 1 GPa, at least about 2 GPa, at least about 5 GPa, at least about 7 GPa, at least about 10 GPa, at least about 15 GPa, at least about 20 GPa, or at least about 30 GPa. A person of ordinary skill in the art will recognize additional ranges of scaled elastic moduli within the explicitly disclosed ranges is contemplated and within the scope of the present disclosure.

In some embodiments, the polyphenylene fibers can have relatively small average diameter. The polyphenylene fiber can have an average diameter from about 100 nanometers ("nm") to about 10 microns ("μm"), from about 200 nm to about 7 μm, from about 200 nm to about 4 μm, from about 200 nm to about 3 μm, from about 200 nm to about 3 μm or from about 200 nm to about 2.5 μm, or from about 100 nm to about 1 μm. A person of ordinary skill in the art will recognize additional ranges of average diameters within the explicitly disclosed ranges are contemplated and within the scope of the present disclosure. The average diameter can be measured from scanning electron microscopy ("SEM") images. In particular, SEM images can be acquired for a statistically significant number of polyphenylene fibers and the diameters of different fibers can be measured, along with the diameter of the individual fibers along a length of the individual fibers. The results can then be averaged to obtain the average diameter of the polyphenylene fibers.

For the polyphenylene polymers described herein, it has been found that polyphenylene fibers can be formed using specifically adapted force spinning techniques. In particular, specifically engineered polymer solutions can be implemented in adapted force spinning techniques to fabricate polyphenylene fibers having the average diameters described above. In some embodiments, the spun polyphenylene fibers can be collected into mats. The mats can be processed into articles including, but not limited to, separation membranes (*e.g.* gas or liquid filters), hydrophobic non-woven textiles, tissue scaffolding and the like.

COMPOSITION OF POLYPHENYLENE FIBERS

The polyphenylene fibers described herein include one or more polyphenylene polymers. In some embodiments, the polyphenylene fibers further include one or more poly(aryl ether sulfone) polymers.

The polyphenylene fibers described herein include at least 5 wt % of the one or more polyphenylene polymers. In some embodiments, the polyphenylene fibers can further include no more than about 10 wt %, no more than about 20 wt %, no more than about 30 wt %, no more than about 40 wt %, no more than about 50 wt %, no more than about 60 wt %, no more than about 70 wt %, no more than about 80 wt %, no more than about 90 wt %, no more than about 95 wt %, no more than about 99 wt % or no more than about 99.9 wt % of the one or more polyphenylene polymers. In some embodiments the polyphenylene fibers include at least 95 wt %, at least 99 wt % or at least 99.9 wt % of the one or more polyphenylene polymers. A person of ordinary skill in the art will recognize additional ranges of polyphenylene polymer concentration within the explicitly disclosed ranges are contemplated and within the scope of the present disclosure.

In some embodiments, the polyphenylene fibers can further include one or more poly(aryl ether sulfone) polymers. In such embodiments, the polyphenylene fibers can include no more than about 95 wt %, no more than about 90 wt %, no more than about 80 wt %, no more than about 70 wt %, no more than about 60 wt %, no more than about 50 wt %, no more than about 40 wt %, no more than about 30 wt %, no more than about 20 wt %, no more than about 10 wt %, no more than about 5 wt % or no more than about 1 wt % of the one or more poly(aryl ether sulfone) polymers. In some embodiments, the weight ratio of the one or more polyphenylene polymers to that of the one or more poly(aryl ether sulfone) polymers (polyphenylene:poly(aryl ether sulfone)) can be from about 10:1 to about 1:10, from 9:1 to about 1:10, from about 8:1 to about 1:10, from about 7:1 to about 1:10, from about 6:1 to about 1:10, from about 5:1 to about 1:10, from about 4:1 to about 1:10, from about 3:1 to about 1:10, from about 2:1 to about 1:10, from about 2:1 to about 1:5, from about 2:1 to about 1:2 or from about 1.5:1 to about 1:1.5. A person of ordinary skill in the art will recognize additional ranges of weight ratios within the explicitly disclosed ranges are contemplated and within the scope of the present disclosure.

**Polyphenylene Polymers**

The fibers described herein include one or more polyphenylene polymers. As used herein, a polyphenylene polymer refers to any polymer having at least 50 mole % ("mol %") repeat units (Rp) represented by formula (I) :

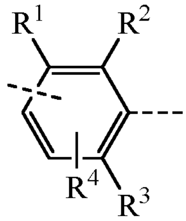

(I)

where $R^1$, $R^2$, $R^3$, and $R^4$ are each independently selected from the group consisting of a hydrogen, an alkyl, an aryl, an alkoxy, an aryloxy, an alkylketone, an arylketone, a fluoroalkyl, a fluoroaryl, a bromoalkyl, a bromoaryl, a chloroalkyl, a chloroaryl, an alkylsulfone, an arylsulfone, an alkylamide, an arylamide, an alkylester, an arylester, a fluorine, a chlorine, and a bromine. In formula (I), and as used herein unless explicitly noted otherwise, the dashed bond represents a bond to another repeat unit. In some embodiments, a polyphenylene polymer can have at least about 60 mol %, at least about 70 mol %, at least about 80 mol %, at least about 90 mol %, at least about 95 mol %, at least about 99 mol % or at least about 99.9 mol % repeat units (Rp). A person of ordinary skill in the art will recognize additional repeat unit (Rp) mol % ranges within the explicitly disclosed ranges are contemplated and within the scope of the present disclosure.

In some embodiments, one or more of $R^1$, $R^2$, $R^3$, and $R^4$ can be independently represented by formula (II), Ar-T-,

- where Ar is represented by a formula selected from the following group of formulae :

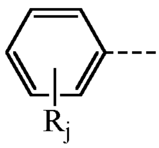
,
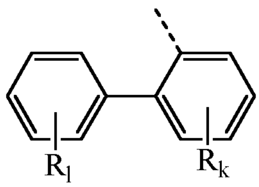
,
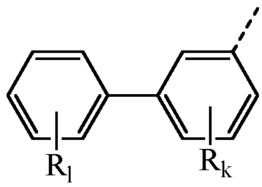

and

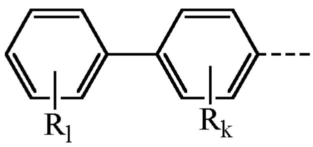
,

with each $R_j$, $R_k$ and $R_l$ is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and with j and 1, equal or different from each other are independently 0, 1, 2, 3, 4, or 5 and, k, equal or different from j or l, is independently 0, 1, 2, 3 or 4;
- where T is selected from the group consisting of $-CH_2-$; -O-; $-SO_2-$; -S-; -C(O)-; $-C(CH_3)_2-$; $-C(CF_3)_2-$; $-C(=CCl_2)-$; $-C(CH_3)(CH_2CH_2COOH)-$; -N=N-; $-R^aC=CR^b-$, where each $R^a$ and $R^b$, independently of one another, is a hydrogen or a $C_1$-$C_{12}$-alkyl, $C_1$-$C_{12}$-alkoxy, or $C_6$-$C_{18}$-aryl group; $-(CH_2)_n-$ and $-(CF_2)_n-$ with n being an integer from 1 to 6; an aliphatic divalent group, linear or branched, of up to 6 carbon atoms; and combinations thereof and
- where the dashed lined indicates a bond to T.

In some embodiments, one or more of $R^1$, $R^2$, $R^3$, and $R^4$ can be represented by formula (III) :

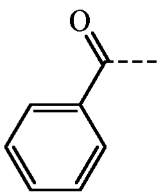

(III)

where, in formula (III), the dashed bond indicates the bond to the benzyl moiety of repeat unit (Rp).

For the polyphenylene polymers of interest herein have at least about 25 mol % repeat units (Rpm) represented by formula (IV) :

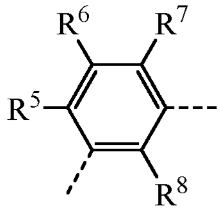

(IV)

where $R^5$, $R^6$, $R^7$, and $R^8$ are each independently as described above with respect to any of $R^1$, $R^2$, $R^3$, and $R^4$. In some embodiments, a polyphenylene polymer can have at least about 30 mol %, at least about 35 mol %, at least about 40 mol %, at least about 45 mol %, at least about 50 mol %, at least about 60 mol %, at least about 70 mol %, at least about 80 mol %, at least about 90 mol %, at least about 95 mol % repeat units, at least about 99 mole percent or at least about 99.9 mole percent (Rpm). A person of ordinary skill in the art will recognize that additional Rpm mol % ranges within the explicitly disclosed ranges are contemplated and within the scope of the present disclosure. In some embodiments, repeat units (Rpm) can be represented by formula (V) :

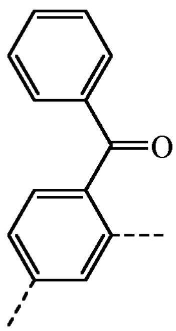

(V)

In some embodiments, the polyphenylene polymers of interest herein can include repeat units (Rpm) and repeat units (Rpp) represented by formula (VI) :

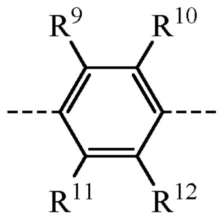

(VI)

where $R^9$, $R^{10}$, $R^{11}$, and $R^{12}$ are each independently as described above with respect to any of $R^1$, $R^2$, $R^3$, and $R^4$. In some embodiments, a polyphenylene polymer can have at least about 10 mol %, at least about 20 mol %, at least about 30 mol %, at least about 40 mol %, at least about 50 mol %, at least about 60 mol %, at least about 70 mol % or at least about 75 mol % repeat units (Rpp). A person of ordinary skill in the art will recognize that additional repeat unit (Rpp) mol % ranges within the explicitly disclosed ranges are contemplated and within the scope of the present disclosure. In some embodiments, a polyphenylene polymer can consist essentially of repeat units Rpm and Rpp. In such embodiments, the ranges of repeat unit (Rpp) mol % can be selected with respect to the repeat unit (Rpm) mol % ranges disclosed above, such that the repeat unit (Rpm) mol % ranges and the repeat unit (Rpp) mol % ranges sums to about 100 %. In some embodiments, repeat units (Rpm) can be represented by formula (VII) :

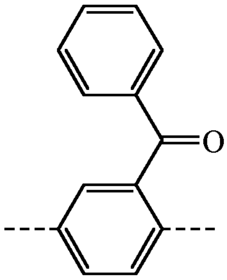

(VII)

**Polyphenylene-Poly(Aryl Ether Sulfone) Blends**

In some embodiments, the fibers can comprise one or more polyphenylene polymers and one or more poly(aryl ether sulfone) ("PAES") polymers, distinct from the one or more polyphenylene polymers. As used herein, a PAES polymer refers to any polymer in which at least 50 wt. % of the recurring units are recurring units ($R_{PS}$) including at least one arylene group, at least one ether group (-O-) and at least one sulfone group [-S(=O)$_2$-]. In some embodiments, at least about 60 mol %, at least about 70 mol %, at least about 80 mol %, at least about 90 mol %, at least about 95 mol %, at least about 99 mol % or at least about 99.9 mol % of the recurring units of the PAES polymers are recurring units ($R_{PS}$), as described above. A person of ordinary skill in the art will recognize additional $R_{PS}$ mol % ranges within the explicitly disclosed ranges are contemplated and within the scope of the present disclosure.

The arylene group of the PAES polymer can be an aromatic radical having from 6 to 36 carbon atoms, where one or more of the carbon atoms is optionally substituted by at least one substituent selected from the group consisting of a halogen, an alkyl, an alkenyl, an alkynyl, an aryl, an arylalkyl, a nitro, a cyano, an alkoxy, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine and an quaternary ammonium.

In some embodiments, the recurring units ($R_{PS}$) are recurring units of formula (A) as shown below :

$$-Ar^1-(T'-Ar^2)_n-O-Ar^3-SO_2-[Ar^4-(T-Ar^2)_n-SO_2]_m-Ar^5-O- \quad (A)$$

where :

- $Ar^1$, $Ar^2$, $Ar^3$, $Ar^4$, and $Ar^5$, equal to or different from each other and at each occurrence, are independently an aromatic mono- or polynuclear group ;
- T and T', equal to or different from each other and at each occurrence, are independently a bond or a divalent group optionally including one or more than one heteroatom;
- n, and m, equal to or different from each other, are independently zero or an integer from 1 to 5;

In some embodiments, $Ar^1$, $Ar^2$, $Ar^3$, $Ar^4$ and $Ar^5$ are equal or different from each other and having a formula selected from the group consisting of following formulae :

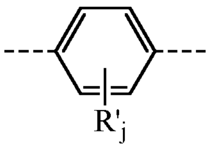 , 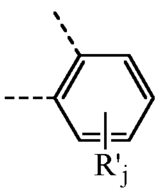 , 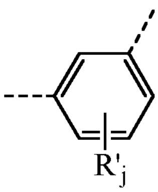 ,

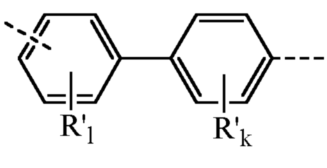 , 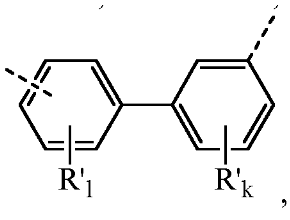 , and 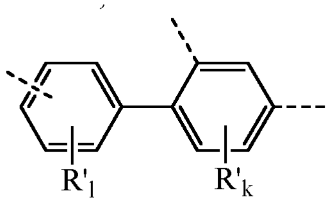 ,

where each $R'_j$, $R'_k$ and $R'_l$ is independently selected from the group consisting of hydrogen, halogen, alkyl, alkenyl,

alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and where j, k and l, equal or different from each other, are independently 0, 1, 2, 3 or 4. For $Ar^1$, one of the dashed bonds represents a bond to another repeat unit (Rps) while the other dashed bond represents a bond to the same repeat unit (Rps). For $Ar^2$, $Ar^3$, $Ar^4$ and $Ar^5$, the dashed bonds represent bonds to the same repeat unit (Rps).

In some embodiments, $Ar^2$ may further be selected from the group consisting of fused benzenic rings (*e.g.*, naphthylenes and 2,6-naphthylene), anthrylenes (*e.g.*, 2,6-anthrylene) and phenanthrylenes (*e.g.*, 2,7-phenanthrylene), naphthacenylenes and pyrenylenes groups ; an aromatic carbocyclic system including from 5 to 24 atoms, at least one of which is a heteroatom (*e.g.*, pyridines, benzimidazoles, and quinolones). The hetero atom is can be N, O, Si, P or S. In some embodiments, the hetero atom can be N, O or S.

In some embodiments, T and T' of formula (A), equal to or different from each other, are selected from the group consisting of : a bond; $-CH_2-$; -O-; $-SO_2-$; -S-; -C(O)-; $-C(CH_3)_2-$; $-C(CF_3)_2-$; $-C(=CCl_2)-$; $-C(CH_3)(CH_2CH_2COOH)-$; -N=N-; $-R^aC=CR^b-$, where each $R^a$ and $R^b$, independently of one another, is a hydrogen or a $C_1$-$C_{12}$-alkyl,$C_1$-$C_{12}$-alkoxy, or $C_6$-$C_{18}$-aryl group; $-(CH_2)_n-$ and $-(CF_2)_n-$ with n = integer from 1 to 6; an aliphatic divalent group, linear or branched, of up to 6 carbon atoms; and combinations thereof

In some embodiments, the recurring units ($R_{PS}$) can be selected from the group consisting of those of formulae (B) to (E) herein below :

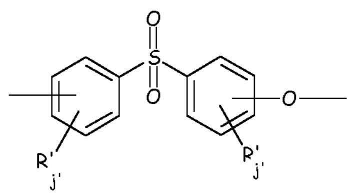
(B)

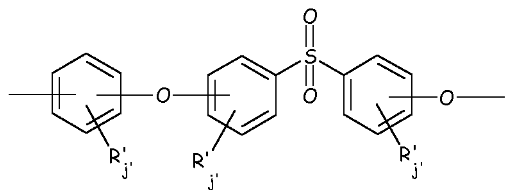
(C)

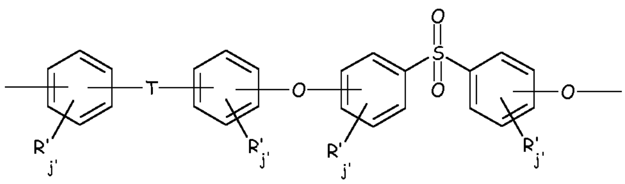
(D)

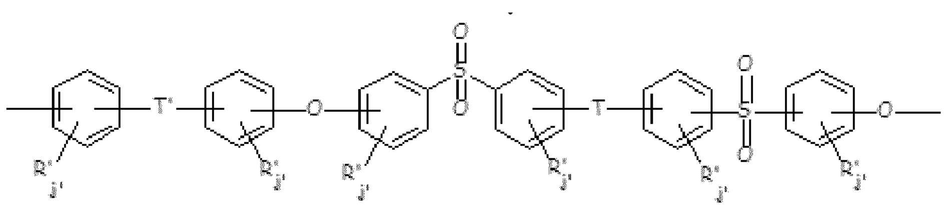
(E)

,

where

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j' is an integer from 0 to 4; and
- T and T', equal to or different from each other, is selected from the group consisting of a bond, $-CH_2-$; -O-; $-SO_2-$; -S-; -C(O)-; $-C(CH_3)_2-$ ;$-C(CF_3)_2-$; $-C(=CCl_2)-$; $-C(CH_3)(CH_2CH_2COOH)-$; -N=N-; $-R^aC=CR^b-$, where each $R^a$ and

$R^b$, independently of one another, is a hydrogen or a $C_1$-$C_{12}$-alkyl, $C_1$-$C_{12}$-alkoxy, or $C_6$-$C_{18}$-aryl group; $-(CH_2)_n-$ and $-(CF_2)_n-$ with n being an integer from 1 to 6; an aliphatic divalent group, linear or branched, of up to 6 carbon atoms; and combinations thereof.

In some embodiments, the PAES can be a poly(phenyl ether sulfone), including but not limited to, a polyphenylsulfone, while in other embodiments, the PAES can be a polyethersulfone, a polyetherethersulfone or a bisphenol A polysulfone. As used herein, a poly(phenyl ether sulfone) refers to any polymer in which at least 50 wt. % of the recurring units are recurring units ($R_{PSa}$) of one or more formulae containing at least one ether group (-O-), at least one sulfone group [$-S(=O)_2-$] and at least two groups (G*), each group (G*) independently selected form the group consisting of phenylenes, naphthylenes (*e.g.*, 2,6-naphthylene), anthrylenes (*e.g.*, 2,6-anthrylene) and phenanthrylenes (*e.g.*, 2,7-phenanthrylene), naphthacenylenes and pyrenylenes; where each of the groups (G*) are joined to at least one group (G*) different from itself, directly by at least one single bond and, optionally in addition, by at most one methylene group. Accordingly, groups (G*) can be joined together to form groups including, but not limited to, biphenylene groups (*e.g.*, p-biphenylene), 1,2'-binaphthylene groups, triphenylene groups (*e.g.*, p-triphenylene) and fluorenylene groups (divalent groups derived from fluorine). In some embodiments, at least about 75 wt. %, at least about 85 wt. %, at least about 95 wt. %, or at least about 99 wt. % of the recurring units of the poly(biphenyl ether sulfone) are recurring units ($R_{PSa}$) as defined above.

In some embodiments, the recurring units ($R_{PSa}$) can be recurring units of formula (A), as defined above, with the proviso that at least one $Ar^1$ through $Ar^5$ is an aromatic moiety desirably represented by a formula selected from the following group of formulae consisting of:

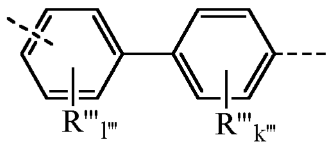,
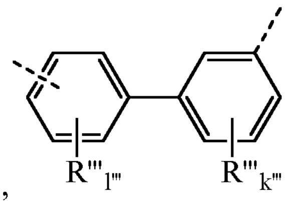,

and

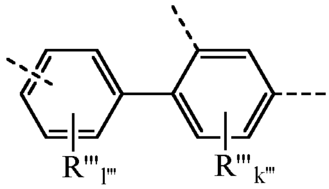

where each R is independently selected from the group consisting of : hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and k and 1 equal or different from each other, are independently 0, 1,2, 3 or 4.

In some embodiments, recurring units ($R_{PSa}$) can be represented by the group of formulae consisting of formulae (F) to (H) below :

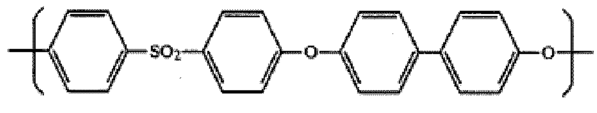 (F)

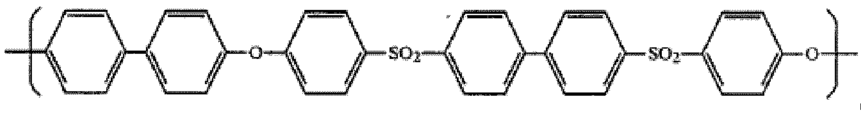 (G)

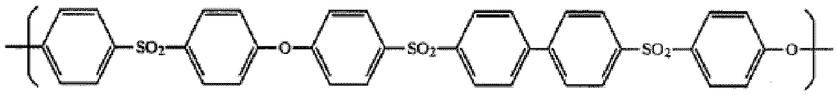
(H)

and mixtures thereof.

In some embodiments, PAES can be a polyphenylsulfone ("PPSU"). As used herein, PSSU refers to any polymer in which more than 50 wt. % of the recurring units are recurring units ($R_{PSa}$) of formula (F). In some embodiments, more than about 75 wt. %, more than about 85 wt. %, more than about 95 wt. %, or more than about 99 wt. % of the recurring units of the PPSU are recurring units ($R_{PSa}$) of formula (F). PPSU can be prepared by methods known to a person of ordinary skill in the art. PPSU is additionally commercially available as RADEL® PPSU and DURADEX® D-3000 PPSU (both from Solvay Specialty Polymers USA, L.L.C.).

In some embodiments, the PAES is a polyethersulfone ("PESU"), polyetherethersulfone or a bisphenol A polysulfone. As used herein, PESU refers to any polymer of which at least 50 wt. % of the recurring units are recurring units ($R_{PSb}$) of formula (I-1) :

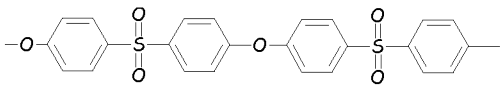
(I-1)

In some embodiments, at least about 75 wt. %, at least about 85 wt. %, at least about 95 wt. % or at least about 99 wt. % of the recurring units of the PESU are recurring units ($R_{PSb}$) of formula (I-1). In some embodiments, the PESU consists essentially of recurring units ($R_{PSb}$) of formula (I-1). PESU can be prepared by methods known to the person of ordinary skill in the Art. PESU is additionally commercially available as VERADEL® PESU from Solvay Specialty Polymers USA, L.L.C.

In some embodiments, the PAES is a polyetherethersulfone ("PEES"). As used herein, a PEES refers to any polymer in which at least 50 wt. % of the recurring units are recurring units ($R_{PSc}$) of formula (I-2) :

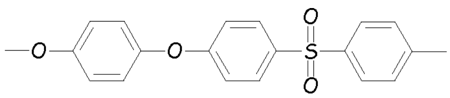
(I-2)

In some embodiments, at least about 75 wt. %, at least about 85 wt. %, at least about 95 wt. % or at least about 99 wt. % of the recurring units ($R_{PSc}$) of the PEES are recurring units of formula (I-2). In some embodiments, the PEES consists essentially of recurring units ($R_{PSc}$) of formula (I-2).

In some embodiments, the PAES is a bisphenol A polysulfone ("PSU"). As used herein, PSU refers to any polymer in which at least 50 wt. % of the recurring units are recurring units ($R_{PSd}$) of formula (I-3) :

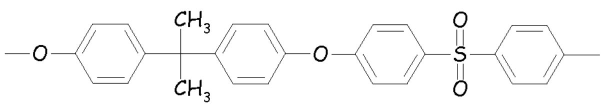
(I-3)

In some embodiments, at least about 75 wt. %, at least about 85 wt. %, at least about 95 wt. % or at least about 99 wt. % of the recurring units of the PSU are recurring units ($R_{PSd}$) of formula (I-3). In some embodiments, the PSU consists essentially of units ($R_{PSd}$) of formula (I-3). PSU can be prepared by methods known to the person of ordinary skill in the art. Additionally, PSU is commercially available as UDEL® PSU from Solvay Specialty Polymers USA, L.L.C.

FABRICATION OF POLYMER FIBERS

As described above, the polyphenylene fibers described herein are fabricated by force-spinning. In general, force spinning involves the formation of a polymer solution including one or more polyphenylene polymers and, optionally, one or more poly(aryl ether sulfone) polymers. The polymer solution can be spun and forced through orifices to form the polyphenylene fibers. The polymer solutions can be specifically engineered to promote desirable force spinning characteristics and, ultimately, desirable polyphenylene fiber properties, as described in detail above. In some embodiments, the spun polyphenylene fibers can be collected into mats and formed into desirable articles.

Force spinning involves the application of centrifugal force to a polymer solution to force the polymer solution through one or more capillaries of a spinneret. Upon exiting the capillaries, fibers are cast from the polymer solution. In particular, in force spinning, the polymer solution is placed in the reservoir of a spinneret. The reservoir is in fluid communication with one or more orifices and the spinneret is spun to generate a centrifugal force on the polymer solution which forces it through the orifice(s). Upon exiting the orifice, a fiber is cast from the polymer solution. In particular, the solvent can evaporate from the polymer solution exiting the orifice to help form the cast fiber. The cast fiber can be collected on a collection system including, but not limited to, a ring collector, a fan collector and an electrostatic collector. In some embodiments, the long fibers created can be formed into mats on the collection system. Force spinning apparatuses are described in U.S. patent application number 8,777,599 to Peno et. al, issued on July 15, 2014.

In conjunction with the polymer solution designs, as described below, the orifice design can be selected to achieve the polyphenylene fibers with desirable properties as described herein. In general, a person of ordinary skill in the art will know how to select appropriate orifice designs based upon the present disclosure. In some embodiments, the orifice can be selected to be cylindrical along the length, or a portion thereof, of the orifice. In some embodiments, the orifice can have a diameter from about 60 gauge ("G") to about 1 G, from about 55 G to about 1 G, from about 50 G to about 1 G, from about 40 G to about 1 G, from about 35 G to about 1 G, from about 35 G to about 5 G, from about 35 G to about 10 G, or from about 35 G to about 15 G. In some embodiments, the orifice can have a length of from about 0.05 inches ("in.") to about 5 in., from about 0.05 in. to about 4 in., from about 0.1 to about 4 in., from about 0.1 in. to about 3 in., from about 0.1 in. to about 2.5 in., from about 0.1 in. to about 2 in., from about 0.1 in. to about 1.5 in., or from about 0.1 in. to about 1 in. A person of ordinary skill in the art will recognize additional orifice diameters and lengths within the explicitly disclosed ranges is contemplated and within the scope of the present disclosure.

The polymer solutions can be specifically engineered to fabricate the polyphenylene fibers using force spinning techniques. For the polyphenylene fibers of interest herein, the polymer solutions comprise the one or more polyphenylene polymers and, if present, the one or more optional poly(aryl ether sulfone) polymers. Appropriate polymer solution designs involve the selection of desirable solvent systems and polymer solution viscosities. Desirable solvent systems promote a homogeneous distribution of the polymers while providing for desirable viscosities and desirable evaporation rates (*e.g.*, low boiling points) during force spinning. For the polyphenylene fibers of interest herein, the solvent desirably comprises one or more polar aprotic solvents. Examples of appropriate polar aprotic solvents include, but are not limited to, a pyrrolidone-based solvent (*e.g.* n-methylpyrrolidone ("NMP")), tetrahydrofuran, N,N-dimethyl formamide, dimethyl sulfoxide, N,N-dimethylacetamide, sulfolane, or any combination thereof.

In some embodiments, polymer solutions including solvent systems having two or more solvents can be integrated into the polymer solution design to simultaneously promote homogeneous polymer dispersions as well as advantageous evaporation rates during force spinning. In such embodiments, a first solvent or solvents can be selected to promote a homogeneous polymer dispersion and a second solvent or solvents can be selected to reduce the solvent vapor pressure of the polymer solution. For example, the first solvent can be selected with regards to its ability to disperse polymers in solution, notwithstanding it may have an undersirably high melting point. A second solvent can be chosen to have a desirably low boiling point and/or facilitate separation (*e.g.*, precipitation) of the polymers in the polymer solution form the solvent, notwithstanding that it may not promote a desirable homogeneous polymer dispersion. In some embodiments, the second solvent can be an antisolvent (a solvent in which the polymers are not soluble or have an undesirably low solubility). As used herein, an antisolvent refers to any solvent in which no polymer of the polymer solution has a solubility of greater than about 1 gram per 100 milliliters of solvent. In such embodiments, the solvent can include, but is not limited to, chloroform, toluene, tetrahydrofuran, dichloromethane, ethyl acetate, benzene, styrene, ethyl benzene, benzyl alcohol, 1,4-dioxane, carbon tetrachloride, tetrachloroethylene, methylene chloride, a phenolic solvent, pyridine, trichloroethane, trichloroethylene, N,N-dimethyl formamide, ethylene dichloride, dimethyl sulfoxide, N,N-dimethylacetamide, a pyrrolidone-based solvent (*e.g.*, N-methylpyrollidone), sulfolane, xylene, chlorobenzene, or any combination thereof. The antisolvent can include, but is not limited to, acetone, low molecular weight alcohols and combinations thereof. Low molecular weight alcohols can include, but are not limited to, methanol, ethanol, isopropanol, propanol, water, and any combination thereof. In some embodiments, the ratio of solvent to antisolvent (solvent:antisolvent) can be from about 20:1 to about 1:1, from about 15:1 to about 1:1, from about 10:1 to about 1:1, or from about 10:1 to about 2:1 by volume. A person of ordinary skill in the art will recognize additional solvent to antisolvent ratios within the explicitly disclosed ranges are contemplated and within the scope of the present disclosure. In some embodiments, the cavity of the spinneret can be heated to help promote solvent evaporation from cast polyphenylene fibers.

The viscosity of the polymer solution can be selected, in part, with respect to the concentration of the polymer solution. For the force spinning fabrication methods described herein, the total polymer concentration can be from about 1 % weight by volume ("wt/vol") to about 60 % wt/vol, from about 1 % wt/vol to about 50 % wt/vol, from about 1 % wt/vol to about 40 % wt/vol, from about 1 % wt/vol to about 30 % wt/vol or from about 10 % wt/vol to about 40 % wt/vol. A person of ordinary skill in the art will recognize additionally ranges of total polymer concentration within the explicitly disclosed ranges are contemplated and within the scope of the present disclosure.

Based upon the present disclosure, a person of ordinary skill in the art will know how to select appropriate force

spinning speeds with respect to the desired polyphenylene fibers and corresponding polymer solutions. In some embodiments, the spinneret can be spun at a speed of about 100 revolutions per minute ("rpm") to about 20,000 rpm, from about 100 rpm to about 15,000 rpm, from about 1,000 rpm to about 10,000 rpm, from about 2,000 rpm to about 10,000 rpm, from about 3,000 rpm to about 10,000 rpm, from about 4,000 rpm to about 10,000 rpm, from about 5,000 rpm to about 10,000 rpm or from about 6,000 rpm to about 9,000 rpm. A person of ordinary skill in the art will recognize additional ranges of spin speeds within the explicitly disclosed ranges are contemplated and within the scope of the present disclosure.

In some embodiments, the cast polyphenylene fibers can be collected into mats. For example, the polyphenylene fibers can be collected with a ring collection system including a porous substrate. In such embodiments, the porous substrate can be positioned to encircle the spinneret and can be positioned a selected distance away from the spinerett. The cast polyphenylene fibers exiting the orifice(s) of the spinneret can be collected on the substrate as a mat. In other embodiments, the cast polyphenylene fibers can be collected using, for example but not limited to, a fan collection system or an electrostatic collection system. In some embodiments, after or during collection, the cast polyphenylene fibers can be processed to remove residual solvent. In some such embodiments, the polyphenylene fibers can be heated to remove residual solvent.

## EXAMPLES

The Examples demonstrate the fabrication, characterization and mechanical performance of polyphenylene fibers.

Six polyphenylene fiber mat samples were formed by force-spinning using a Fiberlab® L-1000 (from Fiberio®). To form each sample, a polyphenylene composition and solvent were mixed together to form a spinning solution. For some samples, the spinning solution further contained a PSU polymer, a PPSU polymer or a PESU polymer. The polyphenylene compositions included polyphenylenes having 0 mole percent ("mol %"), 20 mol % or 50 mol % meta phenylene units. The solvent consisted of n-methyl-2-pyrrolidone ("NMP") and acetone. The spinning solution was placed into a T-shaped spinneret with an orifice at each end of the spinneret. Each orifice had a diameter of about 27 guage and a length of about 0.5 inches. The spinneret was rotated at from about 3,000 rpm to about 12,000 rpm to force the spinning solution through the orifices and out of the spinneret. The polyphenylene fiber material exiting the orifices were collected on a porous substrate (Typar 3091L filter) using a collection ring to form a mat. The mat was then dried under vacuum to remove residual solvent and form the ultimate sample Table 1 displays the sample composition and processing parameters for each of the samples. All polymers were obtained from Solvay Specialty Polymers USA, LLC. In particular, the polyphenylene polymer, PESU polymer, PSU polymer and PPSU polymer were obtained as PrimoSpire® SRP PR-250, Veradel® PESU V3100, Udel® PSU 1700 and Radel® PPSU R-5600, respectively.

TABLE 1

| Sample No. | Polymer(s) [wt ratio] | Mol % Meta Recurring Units in Polyphenylene | Polymer Concentration in Spinning Solution (% w/v) | Solution Solvents [volume ratio] | Spin Speed (rpm) |
|---|---|---|---|---|---|
| 1 | Polyphenylene | 0 | N/A | NMP:Acetone (8:2) | N/A |
| 2 | Polyphenylene | 20 | 12 | NMP:Acetone (7:3) | 3000 - 12000 |
| 3 | Polyphenylene | 50 | 20 | NMP:Acetone [8:2] | 6500 |
| 4 | Polyphenylene/ PESU [1:1] | 50 | 23 | NMP:Acetone [7:3] | 7500 |
| 5 | Polyphenylene/PSU [1:1] | 50 | 23 | NMP:Acetone [7:3] | 7000 |
| 6 | Polyphenylen/PPSU [1:1] | 50 | 22 | NMP:Acetone [7:3] | 6500 |

Referring to Table 1, Sample 1 was not soluble in the NMP:Acetone solvent. Furthermore, Sample 2, while being soluble, did not form fibers when the spinning solution exited the orifices. Several attempts were made at spinning fibers from Sample 2 using spin speeds from about 3000 rpm to about 12000 rpm.

Following formation, the samples were characterized by determining their glass transitions temperatures ("Tg"), miscibility, porosity, density and average fiber diameter. Tg was determined by differential scanning calorimetry ("DSC") according to the ASTM D3418 standard. DSC measurements were performed on a TA Instruments Model Q20/Q1000 differential scanning calorimeter (Texas Instruments) using a heating and cooling rate of 20° C/min under a nitrogen atmosphere at a flow rate of 50 mL/min. The DSC measurements were also used to measure the miscibility of the fibers. In particular, samples having immiscible polymer compositions had 2 Tgs while samples having miscible polymer compositions had a single Tg. The porosity of the samples was measured with mercury intrusion porosimetry according to the ISO 15901-1 standard using a Micrometrics® Autopore 9600 calibrated against a silica-aluminate standard. The density was measured on 4 inch x 4.5 inch sections of the sample mats according to the ASTM 3776 standard. Results of Tg, miscibility, porosity, density and aver fiber diameter measurements are displayed in Table 2. Referring to Table 2, sample 4 had two glass transition temperatures, suggesting that the polyphenylene and the PES were immiscible.

TABLE 2

| Sample | Tg (°C) | Miscible Blends | Porosity (%) | Density (g/m$^2$) | Average Diameter (μm) |
|---|---|---|---|---|---|
| 3 | 178 | N/A | 92.3 | 6.8 | 0.85 ± 0.83 |
| 4 | 167,207 | No | 90.5 | 11.4 | 1.50 ± 1.08 |
| 5 | 173 | Yes | 88.0 | 12.3 | 2.13 ± 1.19 |
| 6 | 181 | Yes | 94.3 | 9.7 | 1.89 ± 1.59 |

The average diameter of fibers in the samples was determined by scanning electron microscopy. For each sample, SEM images of different portions of the sample were obtained. The diameters of the individual fibers in each image were measured and used to obtain the average diameter of the sample, as reported in Table 2. FIGs. 1(a) to 4(b) are SEM images obtained from Samples 3 to 6. In particular, FIGs. 1(a), 2(a), 3(a) and 4(a) are SEM images of respective Samples 3 to 6. FIGs. 1(b), 2(b), 3(b) and 4(b) are also SEM images of respective Samples 3 to 6, but were obtained at lower magnification relative to FIGs. 1(a), 2(a), 3(a) and 4(a).

To demonstrate mechanical performance, the scaled elastic modulus of each of the samples was determined according to the ASTM-D882 standard, as described above. The scaled elastic modulus of each sample is displayed in Table 3, reported in gigaPascals ("GPa"). Table 2 also shows the elastic modulus of the bulk polymer compositions, for comparison.

TABLE 3

| Sample | Scaled Modulus (GPa) | STDEV (GPa) |
|---|---|---|
| 3 | 3.33 | 1.42 |
| 4 | 7.02 | 1.98 |
| 5 | 3.71 | 1.54 |
| 6 | 11.42 | 3.49 |
| Composition | Bulk Modulus (GPa) | |
| Polyphenylene | 5.52 | |
| PES | 2.69 | |
| PSU | 2.48 | |
| PPSU | 2.34 | |

Table 3 demonstrates that for the samples tested, polyphenylene blends (Samples 4 - 6) had scaled elastic moduli that were greater than the sample having non-blended polyphenylene (Sample 3). In particular, Sample 2 (polyphenylene and PSU blend) had a scaled modulus that was larger than Sample 3 (3.33 GPa), notwithstanding the bulk elastic modulus of the PSU (2.49 GPa) was significantly lower than that of the polyphenylene (5.52 GPa). Furthermore, Samples 4 and 6 had bulk elastic moduli (7.02 and 11.42, respectively) that were significantly larger than Sample 3 (3.33 GPa) as well as bulk polyphenylene (5.52 GPa), notwithstanding the bulk elastic modulus of the PES (2.69 GPa) and PPSU (2.34 GPa) were significantly lower than that of the polyphenylene (5.52 GPa).

The embodiments above are intended to be illustrative and not limiting. In addition, although the present invention

has been described with reference to particular embodiments, those skilled in the art will recognized that changes can be made in form and detail without departing form the scope of present claims. Any incorporation by reference of documents above is limited such that no subject matter is incorporated that is contrary to the explicit disclosure herein.

Should the disclosure of any patents, patent applications, and publications conflict with the description of the present application to the extent that it may render a term unclear, the present description shall take precedence.

## Claims

1. A polyphenylene fiber comprising :

   at least 5 weight percent of a polyphenylene polymer, wherein the polyphenylene polymer comprises

   - at least 25 mole percent repeat units (Rpm) represented by the following formula :

   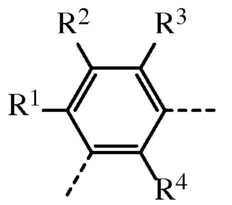

   and
   - at least 10 mol percent repeat units (Rpp) represented by the following formula :

   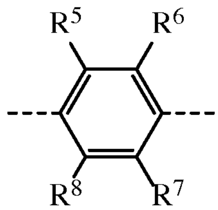

   wherein $R^1$, $R^2$, $R^3$, $R^4$ $R^5$, $R^6$, $R^7$, and $R^8$ are each independently selected from the group consisting of a hydrogen, an alkyl, an aryl, an alkoxy, an aryloxy, an alkylketone, an arylketone, a fluoroalkyl, a fluoroaryl, a bromoalkyl, a bromoaryl, a chloroalkyl, a chloroaryl, an alkylsulfone, an arylsulfone, an alkylamide, an arylamide, an alkylester, an arylester, a fluorine, a chlorine, and a bromine,

   wherein the polyphenylene fiber has an average diameter from 100 nm to 10 $\mu$m.

2. The fiber of claim 1, wherein one or more of $R^1$, $R^2$, $R^3$, and $R^4$ is independently represented by formula Ar-T-, wherein Ar is represented by a formula selected from the following group of formulae :

   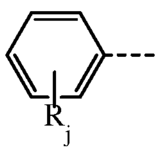 , 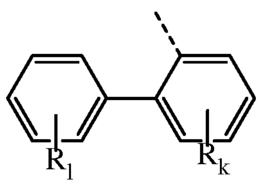 , 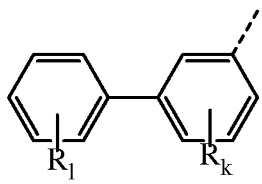

   and

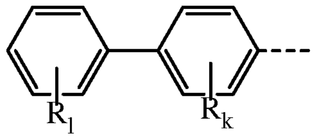,

wherein

- each $R_j$, $R_k$ and $R_l$ is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and with j and l, equal or different from each other are independently 0, 1, 2, 3, 4, or 5 and, k, equal or different from j or 1, is independently 0, 1, 2, 3 or 4 and

  - T is selected from the group consisting of $-CH_2-$; -O-; $-SO_2-$; -S-; -C(O)-; $-C(CH_3)_2-$; $-C(CF_3)_2-$; $-C(=CCl_2)-$; $-C(CH_3)(CH_2CH_2COOH)-$; -N=N-; $-R^aC=CR^b-$, where each $R^a$ and $R^b$, independently of one another, is a hydrogen or a $C_1$-$C_{12}$-alkyl, $C_1$-$C_{12}$-alkoxy, or $C_6$-$C_{18}$-aryl group;$-(CH_2)_n-$ and $-(CF_2)_n-$ with n = integer from 1 to 6; an aliphatic divalent group, linear or branched, of up to 6 carbon atoms; and combinations thereof.

**3.** The fiber of claim 1 or 2, wherein one or more of $R^1$, $R^2$, $R^3$, and $R^4$ is represented by formula :

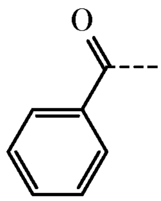.

**4.** The polyphenylene fiber of any one of claims 1 to 3, wherein the repeat unit Rpm is represented by the formula

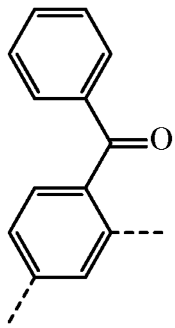.

**5.** The polyphenylene fiber of any one of claims 1 to 4, wherein the polyphenylene polymer comprises at least 30 mole percent, preferably at least 40 mole percent mole percent repeat units Rpm.

**6.** The polyphenylene fiber of any one of claims 1 to 5, wherein one or more of $R^5$, $R^6$, $R^7$, and $R^8$ is independently represented by formula Ar"-T"-, wherein Ar" is represented by a formula selected from the following group of formulae

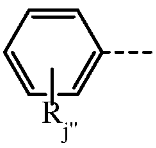, 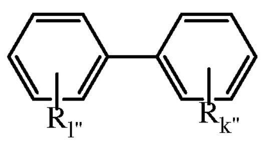, 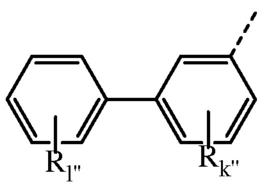

and

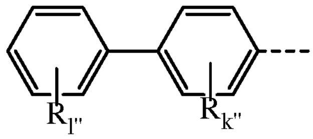

,

wherein

- each $R_{j''}$, $R_{k''}$ and $R_{l''}$ is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and with j" and l", equal or different from each other are independently 0, 1, 2, 3, 4, or 5 and, k", equal or different from j or l, is independently 0, 1, 2, 3 or 4 and
- T" is selected from the group consisting of $-CH_2-$; -O-; $-SO_2-$; -S-; -C(O)-; $-C(CH_3)_2-$; $-C(CF_3)_2-$; $-C(=CCl_2)-$; $-C(CH_3)(CH_2CH_2COOH)-$; -N=N-; $-R^aC=CR^b-$, where each $R^a$ and $R^b$, independently of one another, is a hydrogen or a $C_1$-$C_{12}$-alkyl, $C_1$-$C_{12}$-alkoxy, or $C_6$-$C_{18}$-aryl group; $-(CH_2)_n-$ and $-(CF_2)_n-$ with n = integer from 1 to 6; an aliphatic divalent group, linear or branched, of up to 6 carbon atoms; and combinations thereof.

**7.** The polyphenylene fiber of any of claims 1 to 6, wherein the repeat unit Rpp is represented by the formula :

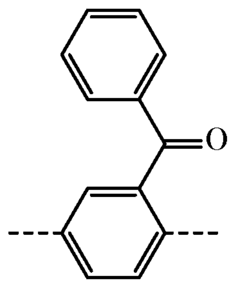

.

**8.** The polyphenylene fiber of any one of claims 1 to 7, wherein the polyphenylene polymer comprises at least 40 mole percent repeat units Rpp.

**9.** The polyphenylene fiber of any of claims 1 to 8, wherien the polyphenylene fiber further comprises a poly(aryl ether sulfone) polymer.

**10.** The polyphenylene fiber of claim 9, wherein the poly(aryl ether sulfone) polymer comprises repeat units (Rps) represented by a formula selected from the following group of formulae :

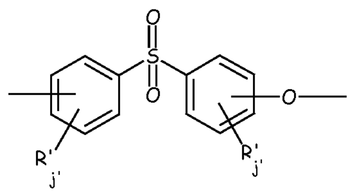

(B)

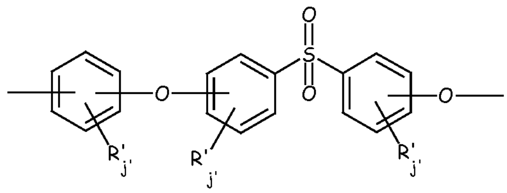

(C)

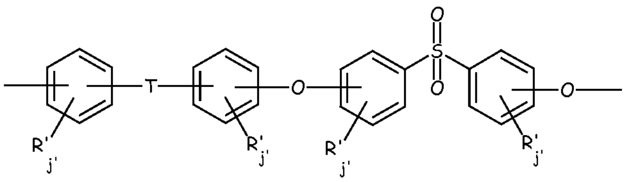 (D)

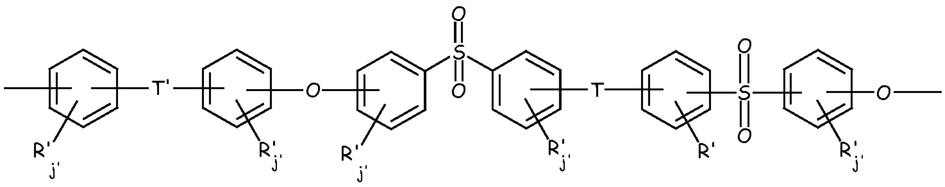 (E)

,

where

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j' is zero or is an integer from 0 to 4; and
- T and T', equal to or different from each other, is selected from the group consisting of a bond, $-CH_2-$; -O-; $-SO_2-$; -S-; -C(O)-; $-C(CH_3)_2-$ ;$-C(CF_3)_2-$; $-C(=CCl_2)-$; $-C(CH_3)(CH_2CH_2COOH)-$; -N=N-; $-R^aC=CR^b-$, where each $R^a$ and $R^b$, independently of one another, is a hydrogen or a $C_1$-$C_{12}$-alkyl, $C_1$-$C_{12}$-alkoxy, or $C_6$-$C_{18}$-aryl group; $-(CH_2)_n-$ and $-(CF_2)_n-$ with n being an integer from 1 to 6; an aliphatic divalent group, linear or branched, of up to 6 carbon atoms; and combinations thereof.

**11.** The polyphenylene fiber of claim 9 or 10, wherein the repeat units Rps are represented by a formula selected from the following group of formulae :

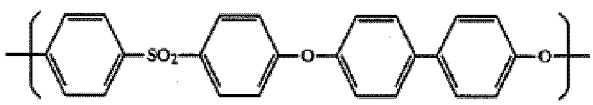

,

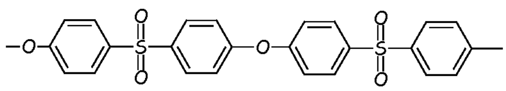

,

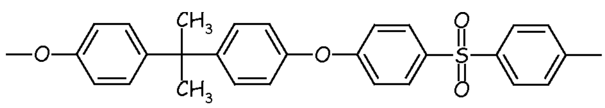

,

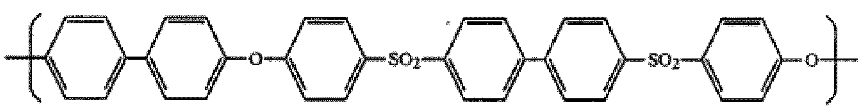

,

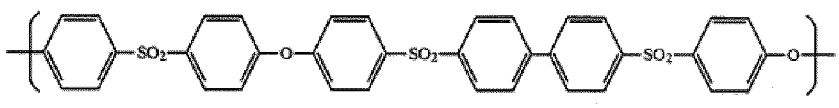

,

and mixtures thereof.

**12.** The polyphenylene fiber of any one of claims 9 to 11, wherein poly(aryl ether) sulfone polymer is a polysulfone,

poly(ether sulfone) or poly(phenyl sulfone).

13. The polyphenylene fiber of any one of claims 9 to 12, wherein the polyphenylene fiber comprises no more no more than about 60 wt % of the poly(aryl ether sulfone) polymer.

14. A method for forming the polyphenylene fiber of any of claims 1 to 13, the method comprising,
force spinning, as defined herein, a polymer solution comprising a polyphenylene polymer and solvent to form the polyphenylene fiber wherein the solvent is a first solvent and wherein the polymer solution comprises a solvent blend including the first solvent and an antisolvent,
wherein

- the first solvent is selected from, chloroform, toluene, tetrahydrofuran, dichloromethane, ethyl acetate, benzene, styrene, ethyl benzene, benzyl alcohol, 1,4-dioxane, carbon tetrachloride, tetrachloroethylene, methylene chloride, a phenolic solvent, pyridine, trichloroethane, trichloroethylene, N,N-dimethyl formamide, ethylene dichloride, dimethyl sulfoxide, N,N-dimethylacetamide, a pyrrolidone-based solvent (*e.g.*, N-methylpyrollidone), sulfolane, xylene, chlorobenzene, or any combination thereof and

- the antisolvent is selected from the group consisting of acetone methanol, ethanol, isopropanol, propanol, water or any combination thereof.

**Patentansprüche**

1. Polyphenylenfaser, umfassend:

wenigstens 5 Gewichtsprozent an einem Polyphenylenpolymer, wobei das Polyphenylenpolymer umfasst

- wenigstens 25 Molprozent Wiederholungseinheiten (Rpm), die durch die nachstehende Formel dargestellt werden:

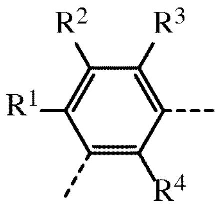

,

und
- wenigstens 10 Molprozent Wiederholungseinheiten (Rpp), die durch die nachstehende Formel dargestellt werden:

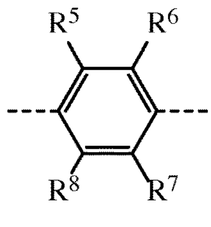

,

wobei $R^1$, $R^2$, $R^3$, $R^4$, $R^5$, $R^6$, $R^7$ und $R^8$ jeweils unabhängig ausgewählt sind aus der Gruppe bestehend aus einem Wasserstoff, einem Alkyl, einem Aryl, einem Alkoxy, einem Aryloxy, einem Alkylketon, einem Arylketon, einem Fluoralkyl, einem Fluoraryl, einem Bromalkyl, einem Bromaryl, einem Chloralkyl, einem Chloraryl, einem Alkylsulfon, einem Arylsulfon, einem Alkylamid, einem Arylamid, einem Alkylester, einem Arylester, einem Fluor, einem Chlor und einem Brom,
wobei die Polyphenylenfaser einen mittleren Durchmesser von 100 nm bis 10 μm aufweist.

**2.** Faser gemäß Anspruch 1, wobei eines oder mehrere von $R^1$, $R^2$, $R^3$ und $R^4$ unabhängig durch die Formel Ar-T- dargestellt werden, wobei Ar durch eine Formel ausgewählt aus der nachstehenden Gruppe von Formeln dargestellt wird:

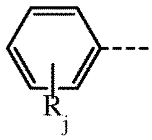 , 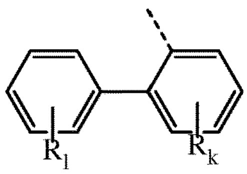 , 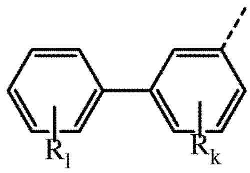 und

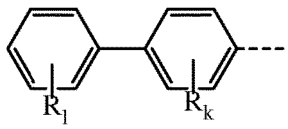 ,

wobei

- jedes $R_j$, $R_k$ und $R_l$ unabhängig ausgewählt ist aus der Gruppe bestehend aus Wasserstoff, Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium, und wobei j und l, gleich oder voneinander verschieden, unabhängig 0, 1, 2, 3, 4 oder 5 sind, und k, gleich oder von j oder l verschieden, unabhängig 0, 1, 2, 3 oder 4 ist, und
- T ausgewählt ist aus der Gruppe bestehend aus $-CH_2-$; -O-; $-SO_2-$; -S-; -C(O)-; $-C(CH_3)_2-$; $-C(CF_3)_2-$; $-C(=CCl_2)-$; $-C(CH_3)(CH_2CH_2COOH)-$; -N=N-; $-R^aC=CR^b-$, wobei jedes $R^a$ und $R^b$ unabhängig voneinander ein Wasserstoff oder eine $C_1$-$C_{12}$-Alkyl-, $C_1$-$C_{12}$-Alkoxy- oder $C_6$-$C_{18}$-Arylgruppe ist; $-(CH_2)_n-$ und $-(CF_2)_n-$, wobei n = ganze Zahl von 1 bis 6; eine lineare oder verzweigte aliphatische zweiwertige Gruppe mit bis zu 6 Kohlenstoffatomen; und Kombinationen davon.

**3.** Faser gemäß Anspruch 1 oder 2, wobei eines oder mehrere von $R^1$, $R^2$, $R^3$ und $R^4$ durch die Formel:

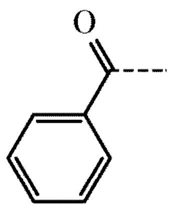

dargestellt werden.

**4.** Polyphenylenfaser gemäß einem der Ansprüche 1 bis 3, wobei die Wiederholungseinheit Rpm durch die Formel

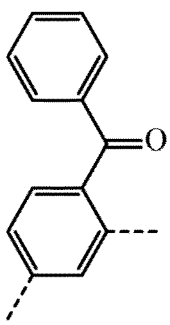

dargestellt wird.

5. Polyphenylenfaser gemäß einem der Ansprüche 1 bis 4, wobei das Polyphenylenpolymer wenigstens 30 Molprozent, vorzugsweise wenigstens 40 Molprozent, Wiederholungseinheiten Rpm umfasst.

6. Polyphenylenfaser gemäß einem der Ansprüche 1 bis 5, wobei eines oder mehrere von $R^5$, $R^6$, $R^7$ und $R^8$ unabhängig dargestellt werden durch die Formel Ar"-T"-, wobei Ar" durch eine Formel ausgewählt aus der nachstehenden Gruppe von Formeln dargestellt wird:

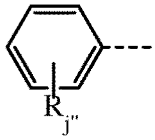
,
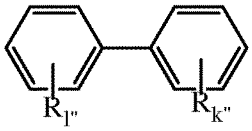
,
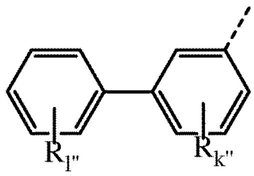
und

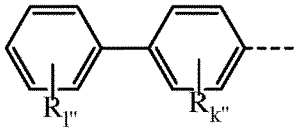
,

wobei

- jedes $R_{j''}$, $R_{k''}$ und $R_{l''}$ unabhängig ausgewählt ist aus der Gruppe bestehend aus Wasserstoff, Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium, und wobei j" und l", gleich oder voneinander verschieden, unabhängig 0, 1, 2, 3, 4 oder 5 sind, und k", gleich oder von j oder l verschieden, unabhängig 0, 1, 2, 3 oder 4 ist, und
- T" ausgewählt ist aus der Gruppe bestehend aus-$CH_2$-; -O-; -$SO_2$-; -S-; -C(O)-; -$C(CH_3)_2$-; -$C(CF_3)_2$-; -$C(=CCl_2)$-; -$C(CH_3)(CH_2CH_2COOH)$-; -N=N-; -$R^aC=CR^b$-, wobei jedes $R^a$ und $R^b$ unabhängig voneinander ein Wasserstoff oder eine $C_1$-$C_{12}$-Alkyl-, $C_1$-$C_{12}$-Alkoxy- oder $C_6$-$C_{18}$-Arylgruppe ist; -$(CH_2)_n$- und -$(CF_2)_n$-, wobei n = ganze Zahl von 1 bis 6; eine lineare oder verzweigte aliphatische zweiwertige Gruppe mit bis zu 6 Kohlenstoffatomen; und Kombinationen davon.

7. Polyphenylenfaser gemäß einem der Ansprüche 1 bis 6, wobei die Wiederholungseinheit Rpp durch die Formel

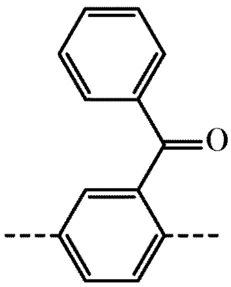

dargestellt wird.

8. Polyphenylenfaser gemäß einem der Ansprüche 1 bis 7, wobei das Polyphenylenpolymer wenigstens 40 Molprozent Wiederholungseinheiten Rpp umfasst.

9. Polyphenylenfaser gemäß einem der Ansprüche 1 bis 8, wobei die Polyphenylenfaser ferner ein Poly(arylethersulfon)polymer umfasst.

10. Polyphenylenfaser gemäß Anspruch 9, wobei das Poly(arylethersulfon)polymer Wiederholungseinheiten (Rps) umfasst, die durch eine Formel ausgewählt aus der nachstehenden Gruppe von Formeln dargestellt werden:

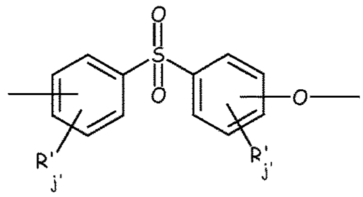 (B)

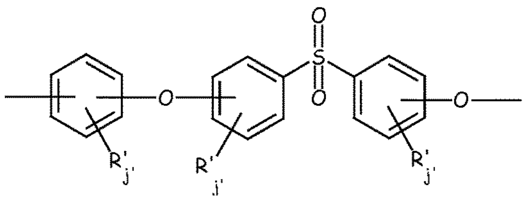 (C)

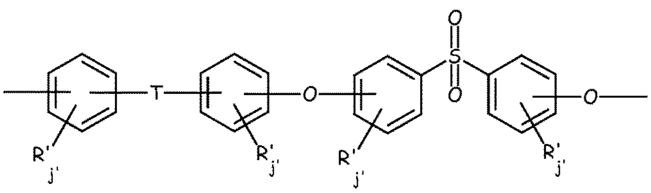 (D)

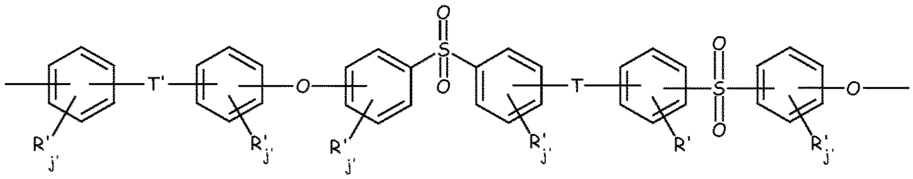 (E)

,

wobei

- jedes R', gleich oder voneinander verschieden, ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium;
- j' null ist oder eine ganze Zahl von 0 bis 4 ist; und
- T und T', gleich oder voneinander verschieden, ausgewählt sind aus der Gruppe bestehend aus einer Bindung, $-CH_2-$; -O-; $-SO_2-$; -S-; -C(O)-; $-C(CH_3)_2-$; $-C(CF_3)_2-$; $-C(=CCl_2)-$; $-C(CH_3)(CH_2CH_2COOH)-$; -N=N-; $-R^aC=CR^b-$, wobei jedes $R^a$ und $R^b$ unabhängig voneinander ein Wasserstoff oder eine $C_1$-$C_{12}$-Alkyl-, $C_1$-$C_{12}$-Alkoxy- oder $C_6$-$C_{18}$-Arylgruppe ist; $-(CH_2)_n-$ und $-(CF_2)_n-$, wobei n = ganze Zahl von 1 bis 6; eine lineare oder verzweigte aliphatische zweiwertige Gruppe mit bis zu 6 Kohlenstoffatomen; und Kombinationen davon.

**11.** Polyphenylenfaser gemäß Anspruch 9 oder 10, wobei die Wiederholungseinheiten Rps durch eine Formel ausgewählt aus der nachstehenden Gruppe von Formeln:

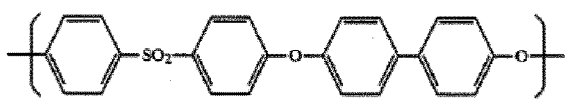

,

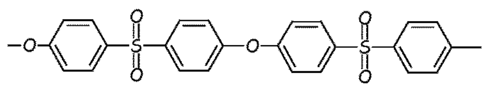

,

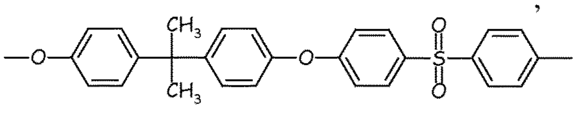

,

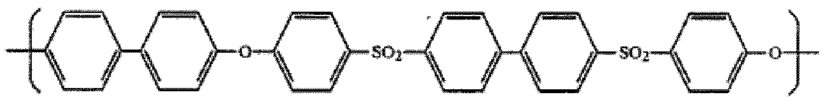

,

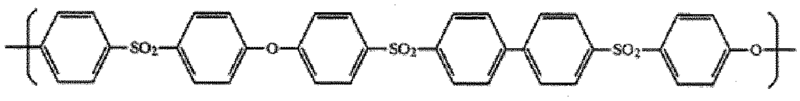

,

und Gemischen davon dargestellt werden.

12. Polyphenylenfaser gemäß einem der Ansprüche 9 bis 11, wobei das Poly(arylether)sulfonpolymer ein Polysulfon, Poly(ethersulfon) oder Poly(phenylsulfon) ist.

13. Polyphenylenfaser gemäß einem der Ansprüche 9 bis 12, wobei die Polyphenylenfaser nicht mehr als etwa 60 Gew.-% an dem Poly(arylethersulfon)polymer umfasst.

14. Verfahren zur Herstellung der Polyphenylenfaser gemäß einem der Ansprüche 1 bis 13, wobei das Verfahren umfasst:

Kraftspinnen, wie hierin definiert, einer Polymerlösung, die ein Polyphenylenpolymer und Lösungsmittel umfasst, um die Polyphenylenfaser zu bilden, wobei das Lösungsmittel ein erstes Lösungsmittel ist und wobei die Polymerlösung ein Lösungsmittelgemisch umfasst, das das erste Lösungsmittel und ein Antilösungsmittel enthält, wobei

- das erste Lösungsmittel ausgewählt ist aus Chloroform, Toluol, Tetrahydrofuran, Dichlormethan, Ethylacetat, Benzol, Styrol, Ethylbenzol, Benzylalkohol, 1,4-Dioxan, Tetrachlorkohlenstoff, Tetrachlorethylen, Methylenchlorid, einem phenolischen Lösungsmittel, Pyridin, Trichlorethan, Trichlorethylen, N,N-Dimethylformamid, Ethylendichlorid, Dimethylsulfoxid, N,N-Dimethylacetamid, einem Lösungsmittel auf Pyrrolidonbasis (z. B. N-Methylpyrrolidon), Sulfolan, Xylen, Chlorbenzol und jeder Kombination davon, und
- das Antilösungsmittel ausgewählt ist aus der Gruppe bestehend aus Aceton, Methanol, Ethanol, Isopropanol, Propanol, Wasser und jeder Kombination davon.

**Revendications**

1. Fibre de polyphénylène comprenant :

au moins 5 pour cent en poids d’un polymère de type polyphénylène, le polymère de type polyphénylène comprenant

- au moins 25 pour cent en moles de motifs répétitifs (Rpm) représentés par la formule suivante :

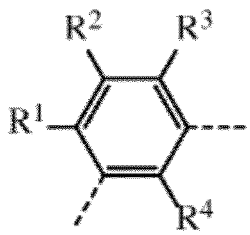

,

et
- au moins 10 pour cent en moles de motifs répétitifs (Rpp) représentés par la formule suivante :

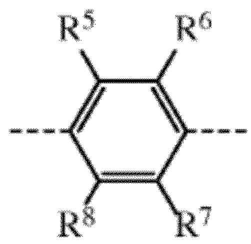

$R^1$, $R^2$, $R^3$, $R^4$, $R^5$, $R^6$, $R^7$, et $R^8$ étant chacun indépendamment choisis dans le groupe constitué par un hydrogène, un alkyle, un aryle, un alcoxy, un aryloxy, une alkylcétone, une arylcétone, un fluoroalkyle, un fluoroaryle, un bromoalkyle, un bromoaryle, un chloroalkyle, un chloroaryle, une alkylsulfone, une arylsulfone, un alkylamide, un arylamide, un ester d'alkyle, un ester d'aryle, un fluor, un chlore, et un brome,

la fibre de polyphénylène possédant un diamètre moyen de 100 nm à 10 $\mu$m.

**2.** Fibre selon la revendication 1, un ou plusieurs parmi $R^1$, $R^2$, $R^3$, et $R^4$ étant indépendamment représentés par la formule Ar-T-, Ar étant représenté par une formule choisie dans le groupe suivant de formules :

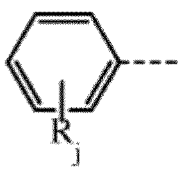 , 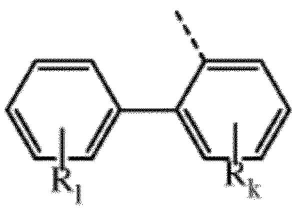 , 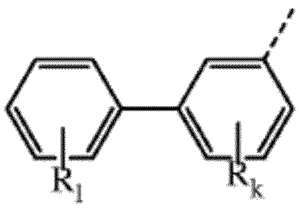

et

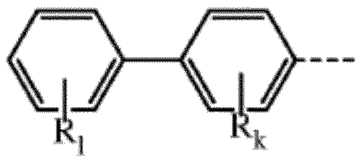 ,

- chaque $R_j$, $R_k$ et $R_l$ étant indépendamment choisi dans le groupe constitué pas hydrogène, halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire et j et l, identiques ou différents l'un de l'autre étant indépendamment 0, 1, 2, 3, 4, ou 5 et, k, identique ou différent de j ou de l, étant indépendamment 0, 1, 2, 3 ou 4 et
- T étant choisi dans le groupe constitué par $-CH_2-$ ; -O- ; $-SO_2-$ ; -S- ; -C(O)- ; $-C(CH_3)_2-$ ; $-C(CF_3)_2-$ ; $-C(=CCl_2)-$ ; $-C(CH_3)(CH_2CH_2COOH)-$ ; -N=N- ; $-R^aC=CR^b-$, dans lequel chaque $R^a$ et $R^b$, indépendamment l'un de l'autre est un hydrogène ou un groupe $C_{1-12}$-alkyle, $C_{6-18}$-alcoxy, ou $C_{1-12}$-aryle ; $-(CH_2)_n-$ et $-(CF_2)_n-$, avec n = entier de 1 à 6 ; un groupe aliphatique divalent, linéaire ou ramifié, comportant jusqu'à 6 atomes de carbone ; et des combinaisons correspondantes.

**3.** Fibre selon la revendication 1 ou 2, un ou plusieurs parmi $R^1$, $R^2$, $R^3$, et $R^4$ étant représentés par la formule :

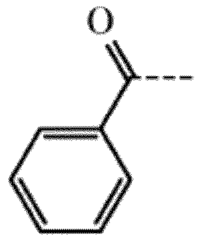 .

**4.** Fibre de polyphénylène selon l'une quelconque des revendications 1 à 3, le motif répétitif Rpm étant représenté par la formule

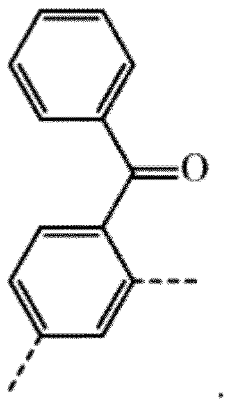

.

**5.** Fibre de polyphénylène selon l'une quelconque des revendications 1 à 4, le polymère de type polyphénylène comprenant au moins 30 pour cent en moles, préférablement au moins 40 pour cent en moles de motifs répétitifs Rpm.

**6.** Fibre de polyphénylène selon l'une quelconque des revendications 1 à 5, un ou plusieurs parmi $R^5$, $R^6$, $R^7$, et $R^8$ étant indépendamment représentés par la formule Ar''-T''-, Ar'' étant représenté par une formule choisie dans le groupe suivant de formules :

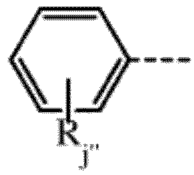

,

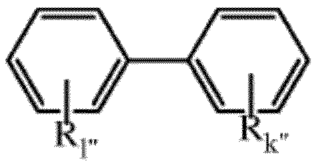

,

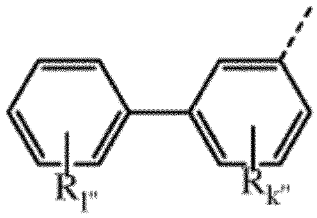

et

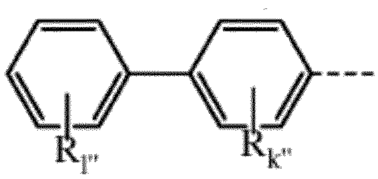

,

- chaque $R_{j''}$, $R_{k''}$ et $R_{l''}$ étant indépendamment choisi dans le groupe constitué par hydrogène, halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire et j'' et l'', identiques ou différents l'un de l'autre étant indépendamment 0, 1, 2, 3, 4, ou 5 et, k'', identique ou différent de j ou de l, étant indépendamment 0, 1, 2, 3 ou 4 et
- T'' étant choisi dans le groupe constitué par $-CH_2-$ ; -O- ; $-SO_2-$ ; -S- ; -C(O)- ; $-C(CH_3)_2-$ ; $-C(CF_3)_2-$ ; $-C(=CCl_2)-$ ; $-C(CH_3)(CH_2CH_2COOH)-$ ; -N=N- ; $-R^aC=CR^b-$, dans lequel chaque $R^a$ et $R^b$, indépendamment l'un de l'autre, est un hydrogène ou un groupe $C_{1-12}$-alkyle, $C_{1-12}$-alcoxy, ou $C_{6-18}$-aryle ; $-(CH_2)_n-$ et $-(CF_2)_n-$, avec n = entier de 1 à 6 ; un groupe aliphatique divalent, linéaire ou ramifié, comportant jusqu'à 6 atomes de carbone ; et des combinaisons correspondantes.

**7.** Fibre de polyphénylène selon l'une quelconque des revendications 1 à 6, le motif répétitif Rpp étant représenté par la formule :

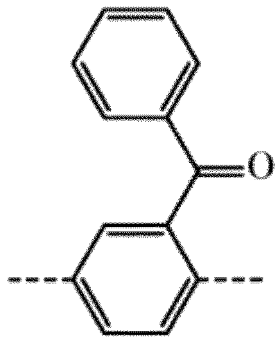

.

**8.** Fibre de polyphénylène selon l'une quelconque des revendications 1 à 7, le polymère de type polyphénylène comprenant au moins 40 pour cent en moles de motifs répétitifs Rpp.

**9.** Fibre de polyphénylène selon l'une quelconque des revendications 1 à 8, la fibre de polyphénylène comprenant en outre un polymère de type poly(aryl éther sulfone).

**10.** Fibre de polyphénylène selon la revendication 9, le polymère de type poly(aryl éther sulfone) comprenant des motifs répétitifs (Rps) représentés par une formule choisie dans le groupe suivant de formules :

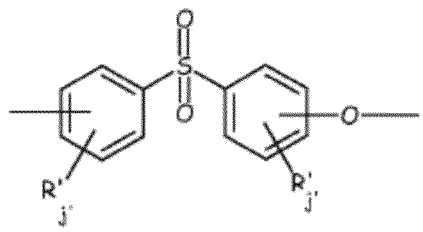 (B)

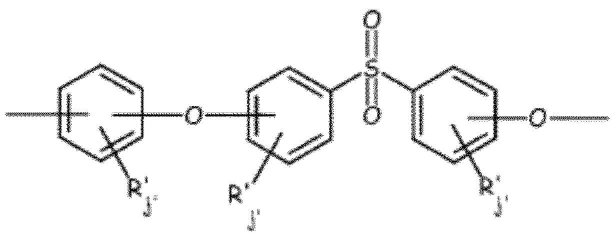 (C)

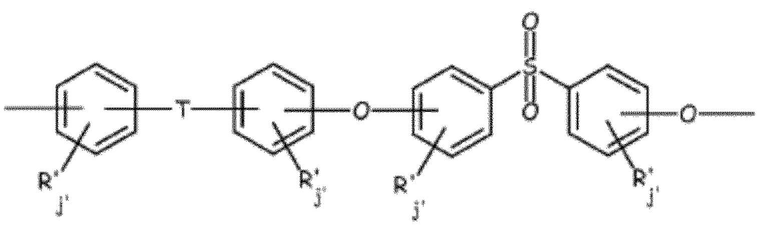 (D)

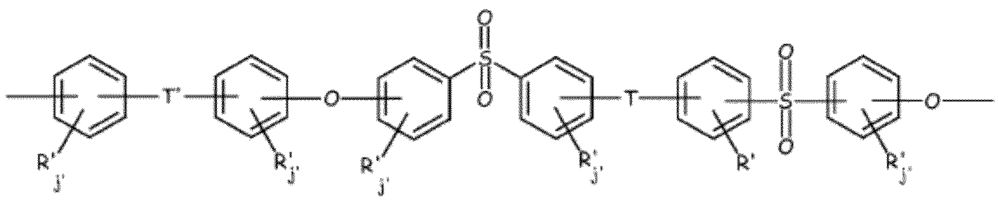 (E)

,

où

- chacun parmi R', identiques ou différents les uns des autres, étant choisi dans le groupe constitué par halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ;
- j' étant zéro ou étant un entier de 0 à 4 ; et
- T et T', identiques ou différents l'un de l'autre, étant choisis dans le groupe constitué par une liaison, $-CH_2-$ ; -O- ; $-SO_2-$ ; -S- ;-C(O)- ; $-C(CH_3)_2-$ ; $-C(CF_3)_2-$ ; $-C(=CCl_2)-$ ;$-C(CH_3)(CH_2CH_2COOH)-$ ; -N=N- ; $-R^aC=CR^b-$, où chaque $R^a$ et $R^b$, indépendamment l'un de l'autre, est un hydrogène ou un groupe $C_{1-12}$-alkyle, $C_{6-18}$-alcoxy, ou $C_{1-12}$-aryle ; $-(CH_2)_n-$ et $-(CF_2)_n-$, avec n étant un entier de 1 à 6 ; un groupe aliphatique divalent, linéaire ou ramifié, comportant jusqu'à 6 atomes de carbone ; et des combinaisons correspondantes.

**11.** Fibre de polyphénylène selon la revendication 9 ou 10, les motifs répétitifs Rps étant représentés par une formule choisie dans le groupe suivant de formules :

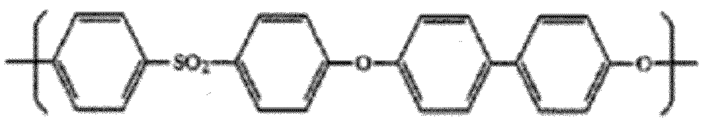

,

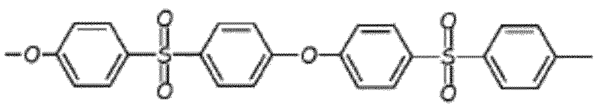

,

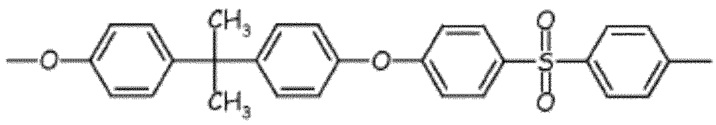

,

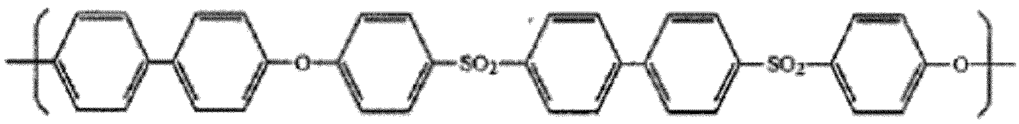

,

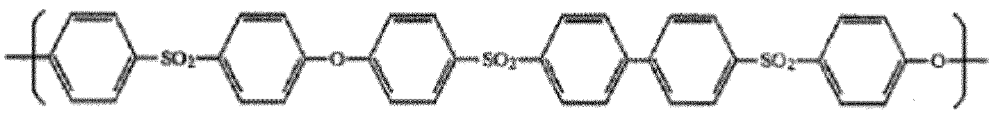

,

et des mélanges correspondants.

**12.** Fibre de polyphénylène selon l'une quelconque des revendications 9 à 11, le polymère de type poly(aryl éther sulfone) étant une polysulfone, une poly(éthersulfone) ou une poly(phénylsulfone).

**13.** Fibre de polyphénylène selon l'une quelconque des revendications 9 à 12, la fibre de polyphénylène comprenant pas plus d'environ 60 % en poids du polymère de type poly(aryl éther sulfone).

**14.** Procédé pour la formation de la fibre de polyphénylène selon l'une quelconque des revendications 1 à 13, le procédé comprenant,
le filage forcé, tel que défini ici, d'une solution de polymère comprenant un polymère de type polyphénylène et un solvant pour former la fibre de polyphénylène, le solvant étant un premier solvant et la solution de polymère comprenant un mélange de solvant comprenant le premier solvant et un antisolvant,

- le premier solvant étant choisi parmi le chloroforme, le toluène, le tétrahydrofuranne, le dichlorométhane, l'acétate d'éthyle, le benzène, le styrène, l'éthylbenzène, l'alcool benzylique, le 1,4-dioxanne, le tétrachlorure de carbone, le tétrachloroéthylène, le chlorure de méthylène, un solvant phénolique, la pyridine, le trichloréthane, le trichloréthylène, le N,N-diméthylformamide, le dichlorure d'éthylène, le diméthylsulfoxyde, le N,N-diméthylacétamide, un solvant à base de pyrrolidone (*par ex*., la N-méthylpyrrolidone), le sulfolane, le xylène, le chlorobenzène, et une quelconque combinaison correspondante et
- l'antisolvant étant choisi dans le groupe constitué par l'acétone, le méthanol, l'éthanol, l'isopropanol, le propanol, l'eau et une quelconque combinaison correspondante.

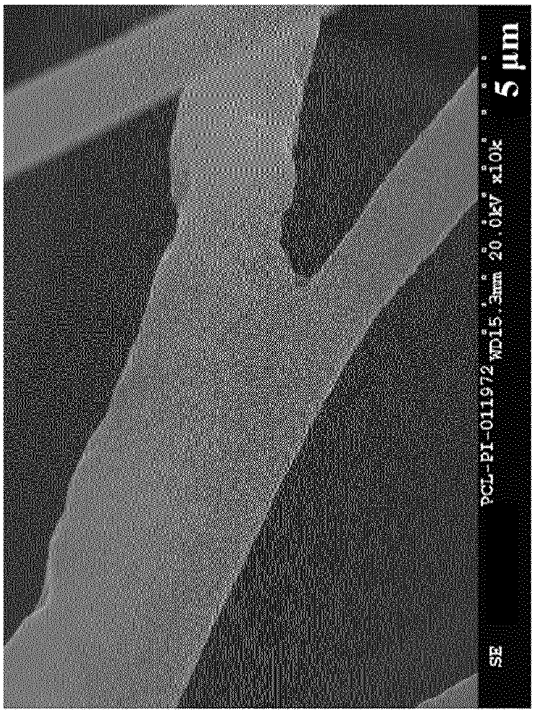


FIG. 1(a)

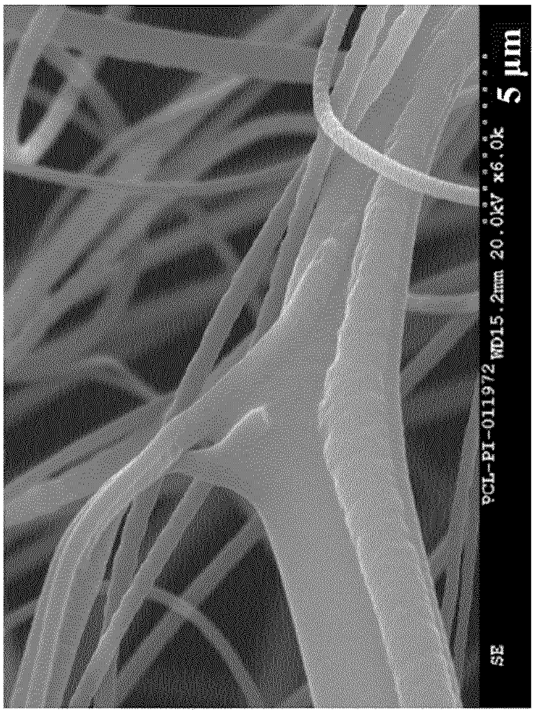


FIG. 1(b)

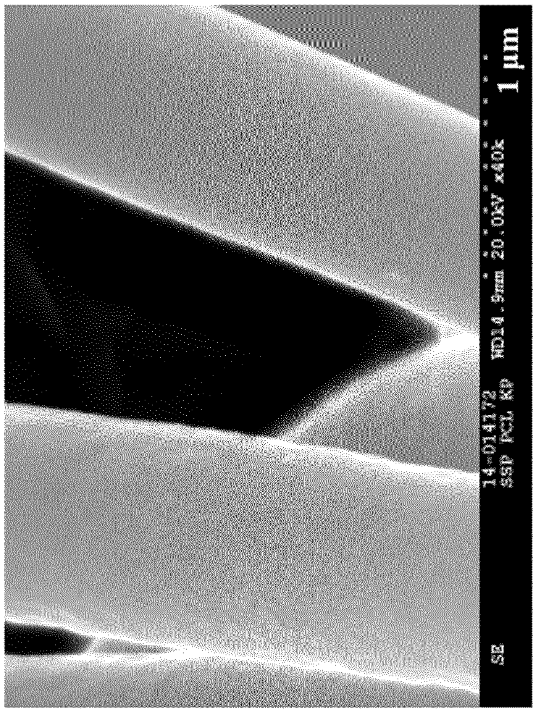


FIG. 2(a)

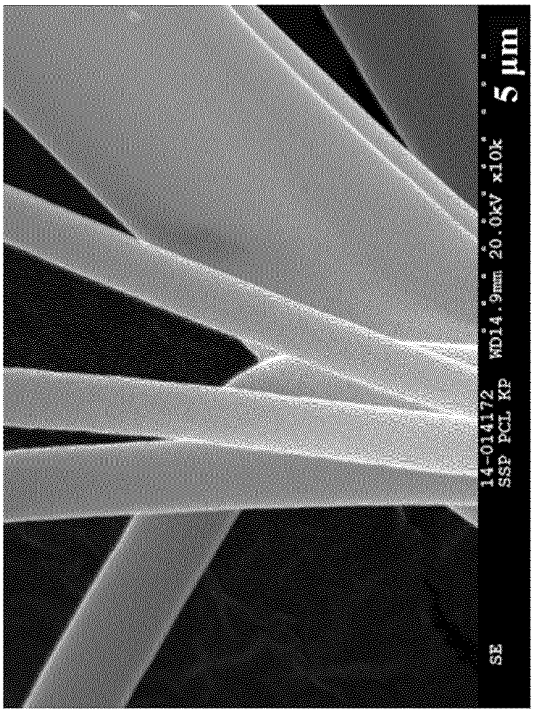


FIG. 2(b)

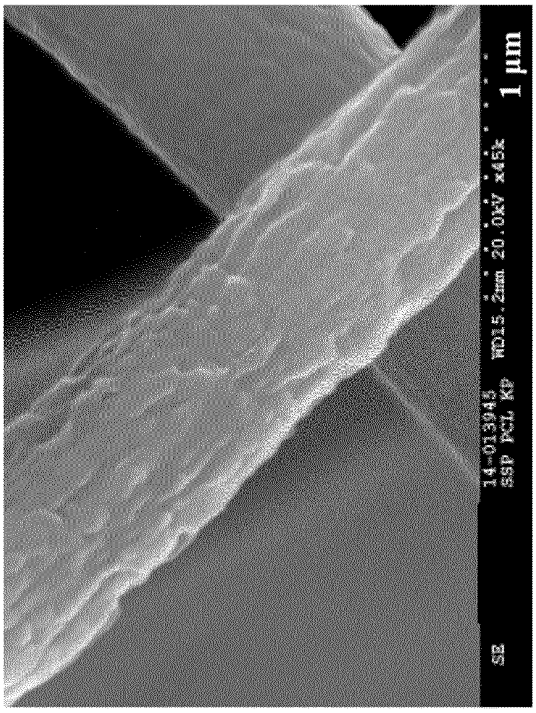


FIG. 3(a)

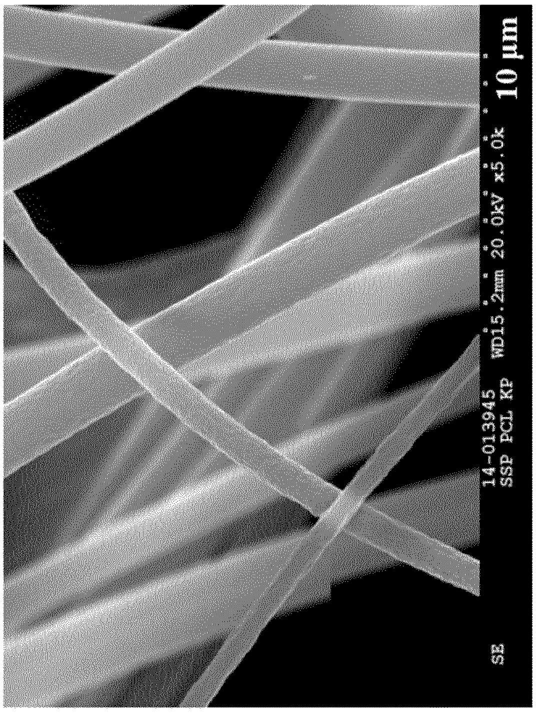


FIG. 3(b)

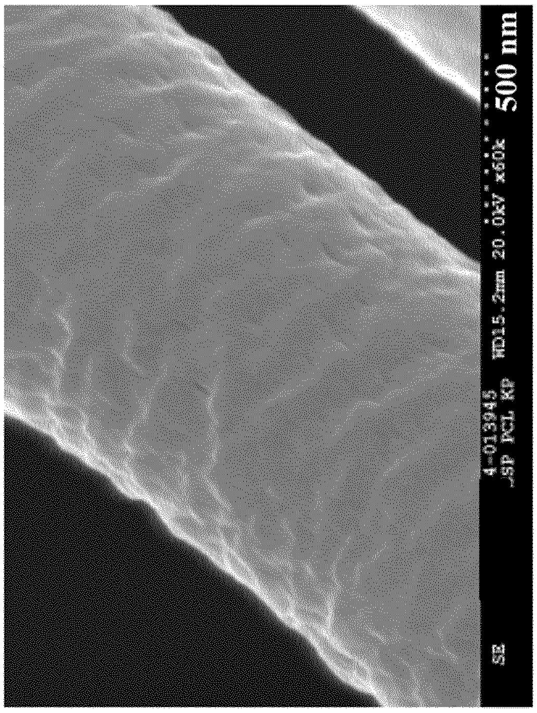


FIG. 4(a)

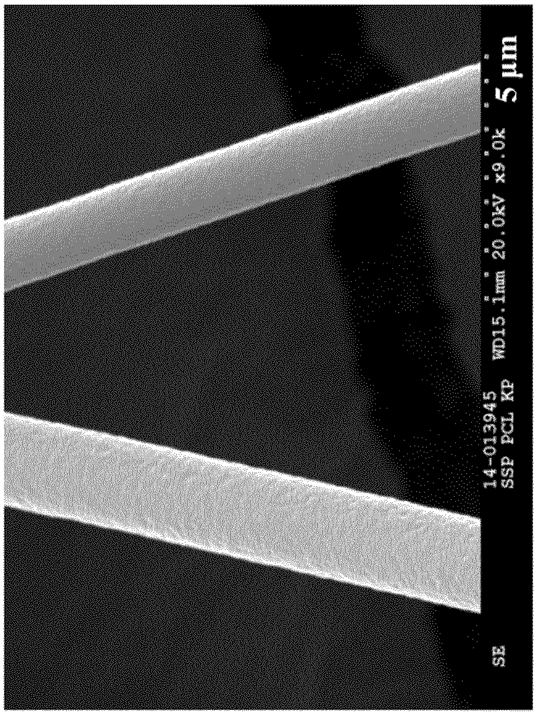


FIG. 4(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62095557
- EP 1858977 B1
- US 5646231 A
- WO 2008116837 A2
- US 8777599 A, Peno